# EUROPEAN PATENT SPECIFICATION

(11) **EP 2 956 360 B1**
(45) Date of publication and mention of the grant of the patent: **16.08.2017**
(21) Application number: 14751181.0
(22) Date of filing: 13.02.2014
(51) Int. Cl.: B64D 11/00

(54) **PIVOT BIN ASSEMBLY**
SCHWENKBEHÄLTERANORDNUNG
ENSEMBLE COMPARTIMENT À BAGAGES À PIVOT

(30) Priority: 13.02.2013 US 201361764503 P; 05.04.2013 US 201361809281 P; 17.06.2013 US 201361835896 P; 12.02.2014 US 201414179494
(43) Date of publication of application: 23.12.2015
(73) Proprietor: C&D Zodiac, Inc., Huntington Beach, CA 92647 (US)
(72) Inventor: SAVIAN, Scott, Huntington Beach, CA 92647 (US); KEARSEY, Stephen, St. Albans, Hertfordshire AL4 8DF (GB); WILLIAMS, Corey, Huntington Beach, CA 92649 (US)
(74) Representative: Stevenson-Hill, Jack Patrick
(86) International application number: PCT/US2014/016313
(87) International publication number: WO 2014/127161

(56) References cited:
- WO-A1-2014/127161
- GB-A- 2 437 620
- US-A- 5 460 252
- US-A- 5 842 668
- US-A- 5 934 615
- US-A1- 2006 214 055
- US-A1- 2010 206 985
- US-A1- 2011 253 837
- US-A1- 2011 253 837
- US-A1- 2012 074 258
- US-A1- 2013 206 903
- US-B1- 6 398 163

## Description

### FIELD OF THE INVENTION

The present invention relates generally to overhead storage bin assemblies, and more particularly to an overhead storage bin assembly that includes a clamshell pivot bin.

### BACKGROUND OF THE INVENTION

Commercial aircraft, such as the Airbus A320 or Boeing 737 are typically constructed from modular components, the size, weight and construction of which are dictated by many considerations, including fuselage dimensions, aesthetic and safety considerations. Many of these requirements are imposed by law or regulation. Aircraft components, such as overhead stowage compartments, seats, lavatories, galleys, lighting systems, etc. are all required to function within strictly confined spaces.

Manufacturers of aircraft are constantly refining interior aircraft designs to achieve more comfort and utility for passengers and crew within carrier-imposed restraints on cost, weight, maintenance down-time, and safety. Commercial passenger aircraft generally include overhead luggage storage bins mounted from the ceiling, walls or other structural portion of the aircraft over the passenger seats. These bins are designed to accommodate the size, shape, and weight of passenger carry-on luggage.

Other overhead storage bin assemblies are well known in the art. For example, see U.S. Patent Publication No. 2011/0253837 published October 20, 2011, U.S. Patent No. 4,637,642 issued on January 20, 1987 and U.S. Patent No. 5,567,028 issued on October 22, 1996. GB 2 437 620 describes a movable panel for an overhead storage bin for an airplane. The movable panel includes a latch assembly formed therein. The latch handle assembly is used to actuate a latch to hold the overhead bin in a closed position. The latch assembly includes a bezel and a handle. The overhead storage bin includes the movable panel and end panels. End panels move with the movable panels. The airplane may include a stationary member. The stationary member may be included on each of the overhead storage bin. The end panel may be coupled directly to the airplane or to another stationary structure of the airplane. A hinge may be used to couple the stationary members to the end panel. The end panel may include a pair of latches. A transmission mechanism is used to couple the latch assembly to the latch.

### BRIEF DESCRIPTION OF THE DRAWINGS

FIG. 1 is a side elevational view of two aircraft storage bins in accordance with a preferred embodiment of the present invention showing a first aircraft storage bin in an open position and a second aircraft storage bin in a closed position;
FIG. 2 is a perspective view of a portion of an aircraft cabin with a series aircraft storage bins installed therein;
FIG. 3 is a perspective view of the aircraft storage bins of FIG. 1;
FIG. 4 is a perspective view of the aircraft storage bins of FIG. 1 with luggage therein;
FIG. 5 is a perspective view of the aircraft storage bins of FIG. 1 with one of the bucket exploded therefrom;
FIG. 6 is a cross-sectional view taken along line 6--6 of FIG. 1;
FIG. 7A is a cross-sectional view taken along the same line as FIG. 7A, but showing an alternative embodiment for securing the bucket to the upper housing;
FIG. 7B is a cross-sectional view of a portion of the aircraft storage bins of FIG. 1;
FIG. 7C is a cross-sectional view taken along line 7C--7C of FIG. 1;
FIG. 8 is a cross-sectional view of one of the aircraft storage bins of FIG. 1 and showing how a standard piece of luggage fits therein;
FIG. 9 is a cross-sectional view of one of the aircraft storage bins of FIG. 1 with the PSU channel omitted, which is not part of the invention;
FIG. 10 is a cross-sectional view of the aircraft storage bin with a different valence;
FIG. 11 is a detailed cross-sectional view showing a rotary damper pivot mechanism providing the pivot point between the side panel and the bucket, which is not part of the invention;
FIG. 12 is a detailed cross-sectional view showing a pivot axle as the pivot mechanism providing the pivot point between the side panel and the bucket;
FIG. 13 is an elevational view showing the first latch assembly in the latched position;
FIG. 14 is an elevational view showing the first latch assembly in the unlatched position;
FIG. 15 is a cross-sectional view of the first latch assembly in the latched position;
FIG. 16 is perspective view of a portion of an aircraft cabin showing a plurality of pivot bin assemblies and PSU pods installed therein and showing an empty PSU channel, which is not part of the invention;

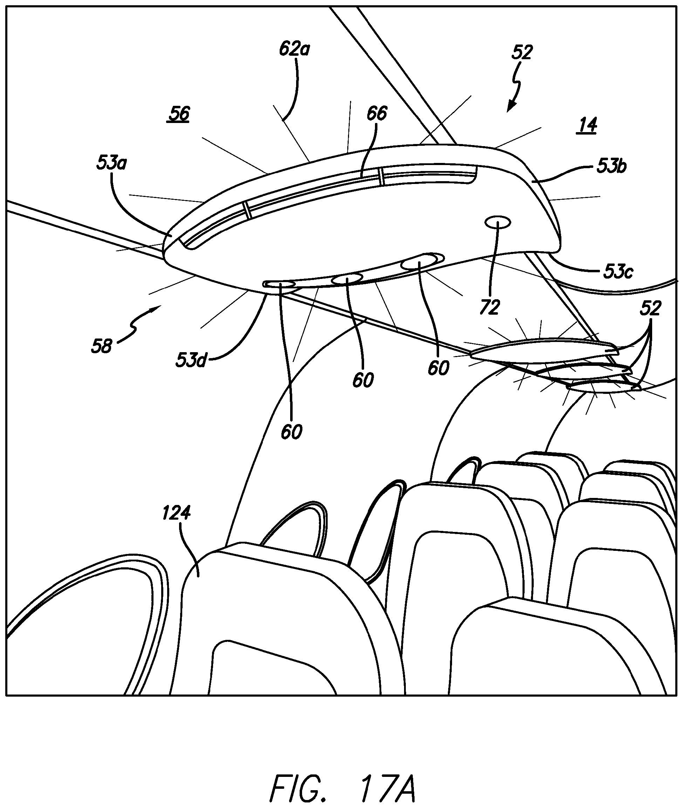

FIG. 17A is a perspective view of the interior of an aircraft showing a series of PSU pod assemblies installed therein with cabin lighting shining upwardly, which is not part of the invention;

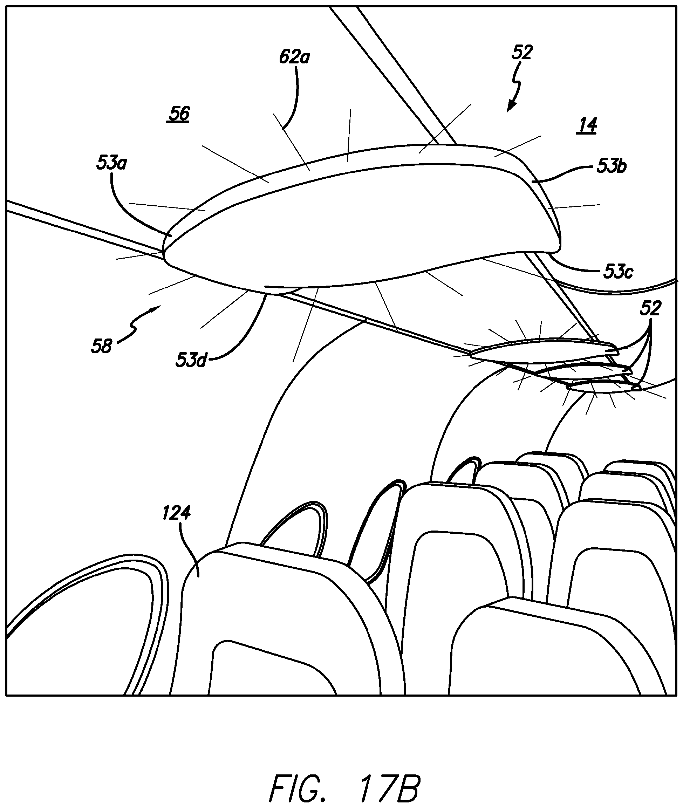

FIG. 17B is a perspective view of the interior of an aircraft showing a series of PSU pod assemblies installed therein with cabin lighting shining outwardly, which is not part of the invention;

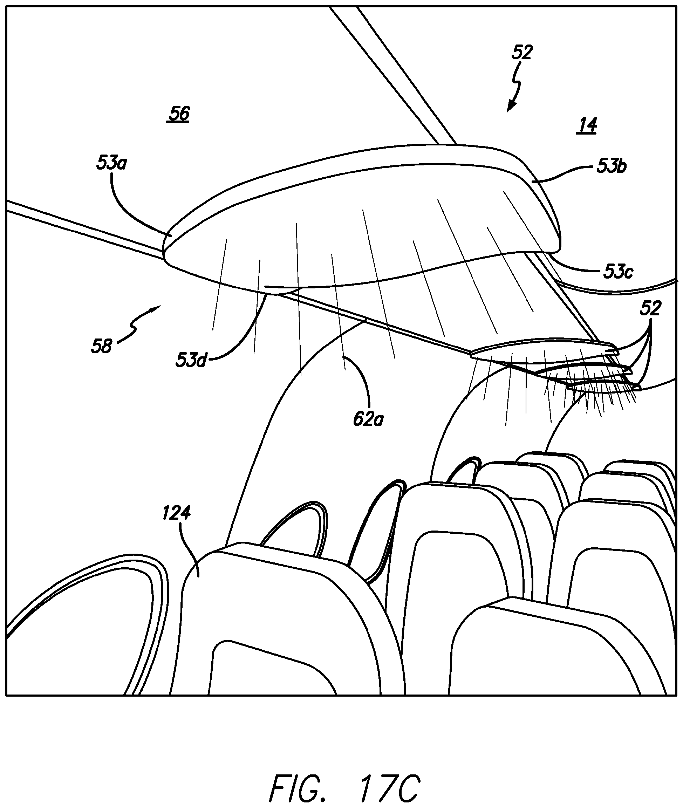

FIG. 17C is a perspective view of the interior of an aircraft showing a series of PSU pod assemblies installed therein with cabin lighting shining downwardly, which is not part of the invention;

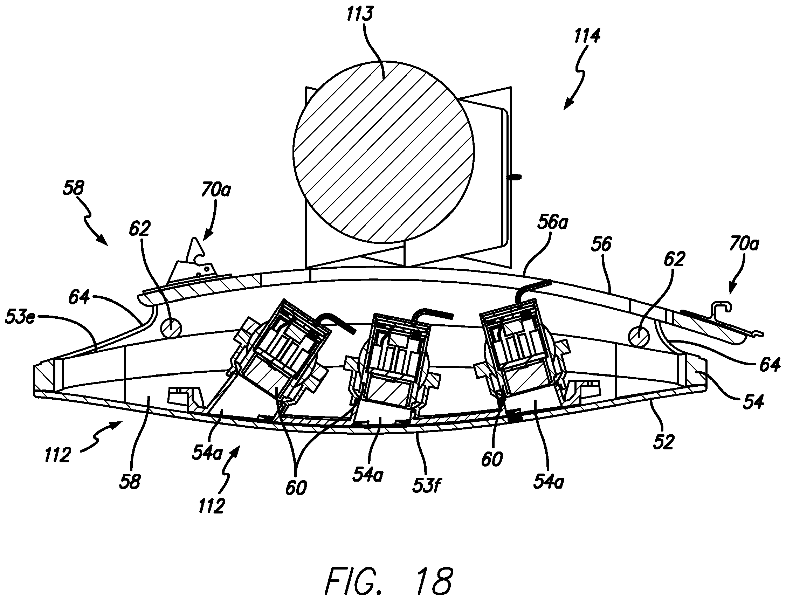

FIG. 18 is a cross-sectional view of a PSU pod assembly and showing the passenger components and system omponents, which is not part of the invention;

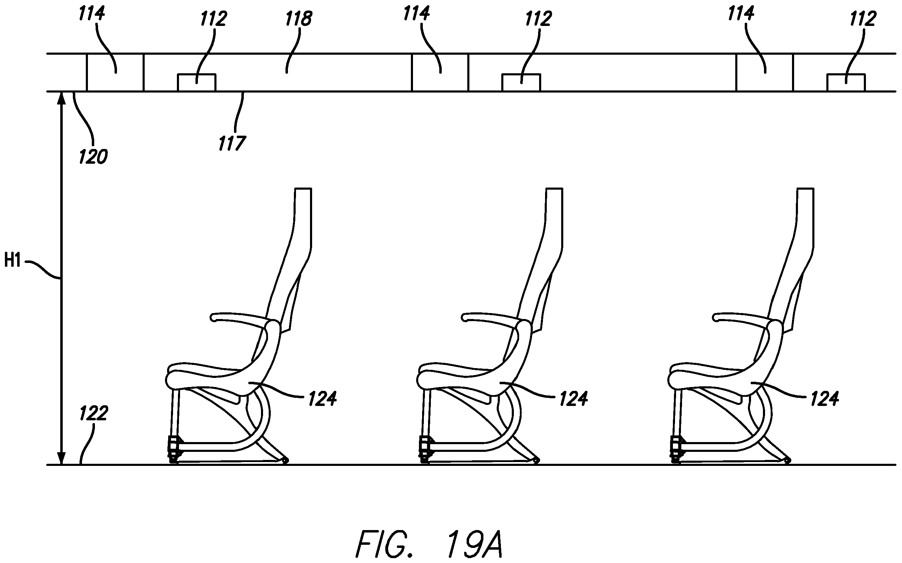

FIG. 19A is a side schematic view of a portion of a prior art aircraft showing a series of seats with the passenger components and system components located thereabove in the PSU channel, which is not part of the invention;

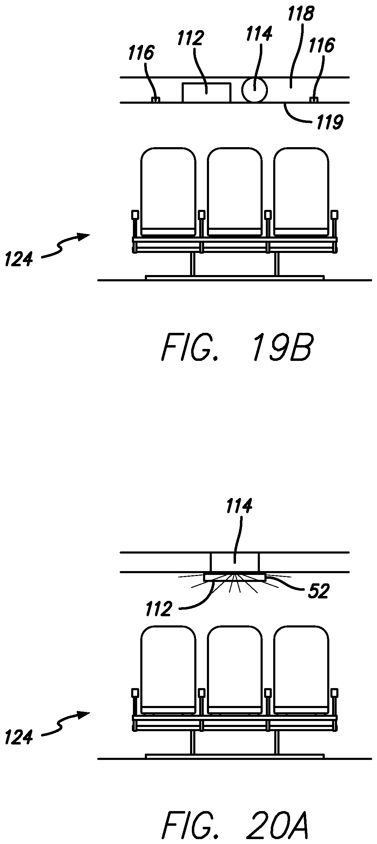

FIG. 19B is an end schematic view of a portion of a prior art aircraft showing a series of seats with the passenger components and system components located thereabove in the PSU channel, which is not part of the invention;
FIG. 20A is a side schematic view of a portion of an aircraft showing a series of seats with the passenger components and system components located thereabove, which is not part of the invention;

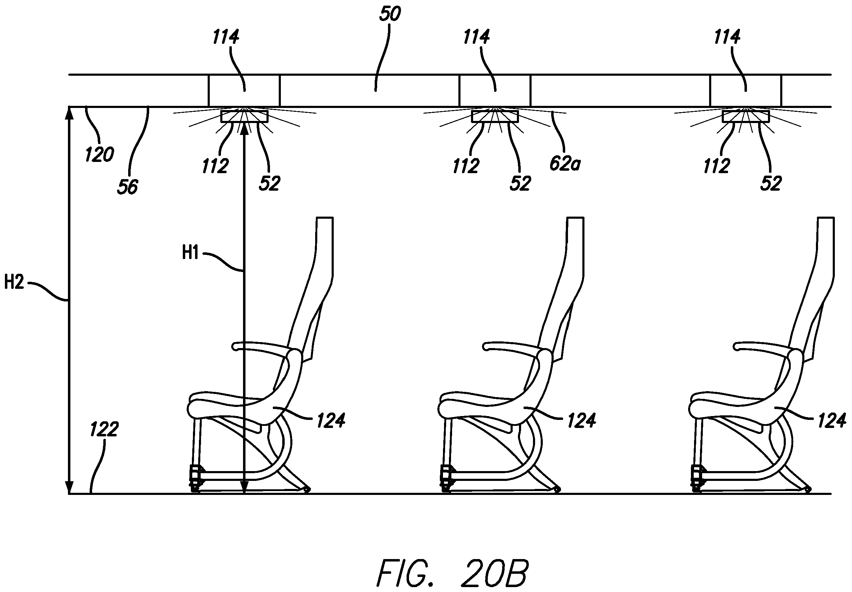

FIG. 20B is an end schematic view of a portion of an aircraft showing a series of seats with the passenger components and system components located thereabove, which is not part of the invention;
FIG. 21 is a perspective view of two aircraft storage bins in accordance with the present invention showing a first aircraft storage bin in an open position and a second aircraft storage bin in a closed position;
FIG. 22 is a side elevational view of the aircraft storage bin of FIG. 21 with the bucket in the closed position;
FIG. 23A is a cross-sectional view taken along line 23A-23A of FIG. 22;
FIG. 23B is a cross-sectional view taken along line 23B-23B of FIG. 22;
FIG. 23C is a cross-sectional view taken along line 23C-23C of FIG. 22;
FIG. 23D is a cross-sectional view taken along the same line as 23C-23C of FIG. 22 and showing an embodiment that includes a rotary damper and coil spring;
FIG. 24 is a side elevational view of the aircraft storage bin of FIG. 21 with the bucket shown in solid lines in the intermediate open position and the bucket shown in dashed lines in the open position;
FIG. 25A is a side elevational view of the aircraft storage bin of FIG. 21 with the bucket in cross-section and in the open position and the inner and outer plates removed;
FIG. 25B is a side elevational view of the aircraft storage bin of FIG. 21 with the bucket in cross-section and in the closed position and the inner and outer plates removed;
FIG. 26 is a side elevational view of the aircraft storage bin of FIG. 21 with the bucket shown in solid lines in the open position and the bucket shown in dashed lines in the intermediate open position;
FIG. 27 is a side elevational view of the aircraft storage bin of FIG. 21 with the bucket in the open position;
FIG. 28 is a side elevational schematic view of a connecting unit in accordance with a preferred embodiment of the present invention;
FIG. 29 is a side elevational schematic view of a connecting unit in accordance with another preferred embodiment of the present invention;
FIG. 30 is a side elevational view of the aircraft storage bin of FIG. 21 with the bucket in the open position and the inner and outer plates removed to show a connecting unit with powered lift assist;
FIG. 31 is a side elevational view of a aircraft storage bin with the bucket in the closed position in accordance with another preferred embodiment of the present invention;
FIG. 32 is a side elevational view of the aircraft storage bin of FIG. 31 with the bucket in the open position;
FIG. 33 is a perspective view of two aircraft storage bins of FIG. 31 showing the first aircraft storage bin in an open position and the second aircraft storage bin in a closed position; and
FIG. 34 is an exploded perspective view of the aircraft storage bin of FIG. 31.

Like numerals refer to like parts throughout the several views of the drawings.

### SUMMARY OF THE PREFERRED EMBODIMENTS

In accordance with a first aspect of the present invention there is provided an aircraft storage bin comprising an upper housing that includes first and second side panels, a bucket that includes a bottom and first and second sides, wherein the bucket cooperates with the upper housing to define a bin interior, a first pivot mechanism operatively associated with the first side panel and the bucket, and a second pivot mechanism operatively associated with the second side panel and the bucket. The first and second pivot mechanisms define a pivot axis such that the bucket pivots about the pivot axis with respect to the upper housing between an open position and a closed position.

The aircraft storage bin includes a first clevis assembly that includes a first inner plate and a first outer plate and a second clevis assembly that includes a second inner plate and a second outer plate. The first clevis assembly is secured to and extends downwardly from the first side panel and the second clevis assembly is secured to and extends downwardly from the second side panel. The first pivot mechanism extends through the first side of the bucket and between the first inner and outer plates and the second pivot mechanism extends through the second side of the bucket and between the second inner and outer plates.

The aircraft storage bin further includes at least one latch assembly for securing the bucket to the upper housing in the closed position. In a preferred embodiment, the aircraft storage bin includes first and second latch assemblies and the first latch assembly is associated with the first side panel and the first side of the bucket, and the second latch assembly is associated with the second side panel and the second side of the bucket. Preferably, the first latch assembly includes a first hook portion and a first striker portion and the second latch assembly includes a second hook portion and a second striker portion. One of the first hook portion and the first striker portion is associated with the first side panel and the other of the first hook portion and the first striker portion is associated with the first side of the bucket and one of the second hook portion and the second striker portion is associated with the second side panel and the other of the second hook portion and the second striker portion is associated with the second side of the bucket.

Preferably, the first pivot mechanism also includes a first assist spring associated therewith and the second pivot mechanism includes a second assist spring associated therewith. The first and second assist springs are preloaded when the bucket is pivoted to the open position. In a preferred embodiment, the first assist spring is a coil spring that is co-axial with the first pivot mechanism.

In a preferred embodiment, the aircraft storage bin includes a first connecting unit having a first end pivotally connected to the first side of the bucket and a second end pivotally connected to the first side panel and a second connecting unit having a first end pivotally connected to the second side of the bucket and a second end pivotally connected to the second side panel. The first and second connecting units provide one or both of damping when the bucket pivots to the open position and/or assistance when the bucket pivots to the closed position. In an embodiment that includes the first and second clevis assemblies, the first connecting unit is positioned between the first inner plate and the first outer plate and the second connecting unit is positioned between the second inner plate and the second outer plate.

The first and second connecting units provide one or both of damping when the bucket pivots to the open position and assistance when the bucket pivots to the closed position. Preferably, the first clevis assembly includes both the first inner plate and the first outer plate and the first pivot axle extends between the first inner plate and the first outer plate. Preferably, the second clevis assembly includes both the second inner plate and the second outer plate and the second pivot axle extends between the second inner plate and the second outer plate. Preferably, the first connecting unit is positioned between the first inner plate and the first outer plate and the second connecting unit is positioned between the second inner plate and the second outer plate. In a preferred embodiment, at least one of the first or second pivot axles includes an assist spring associated therewith, and the assist spring is preloaded when the bucket is pivoted to the open position. In this embodiment, in use, the empty bucket rests in a partially open position. When a user pulls down on the bucket and overcomes the spring force, the spring is preloaded. If the user lets go without placing any luggage in the bucket, it will spring back to the partially open position. If the user places enough luggage/weight in the bucket to overcome the spring force, the bucket will remain in the fully open position.

In a preferred embodiment, the lifting force applied through part of the travel of the bucket rotation is achieved through the inclusion of a spring feature associated with the rotary damping mechanism and/or the pivot mechanism. The spring feature is oriented such that compression occurs during all or part of the range of travel of the bucket. While the bucket is open, the spring is preloaded to provide the load assist. This can be advantageous particularly at the beginning of the range of motion of the bucket as hand loads for a passenger closing the bucket are typically highest at this point.

### DETAILED DESCRIPTION OF THE PREFERRED EMBODIMENTS

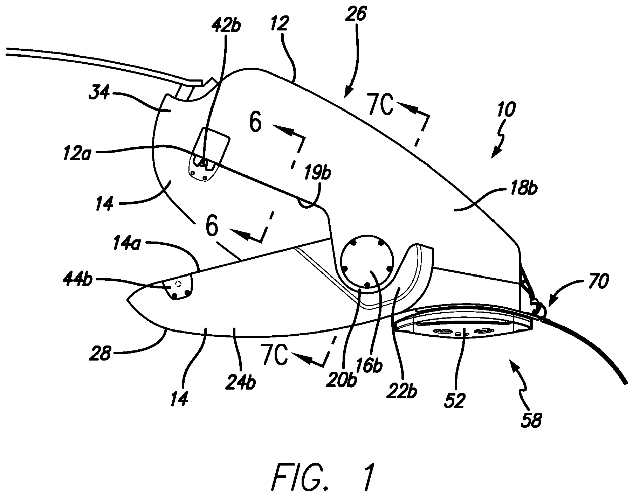

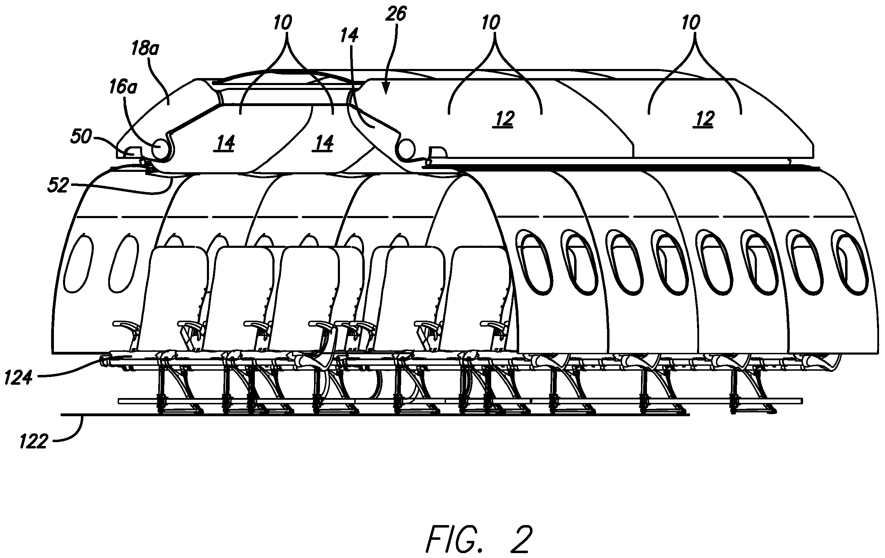

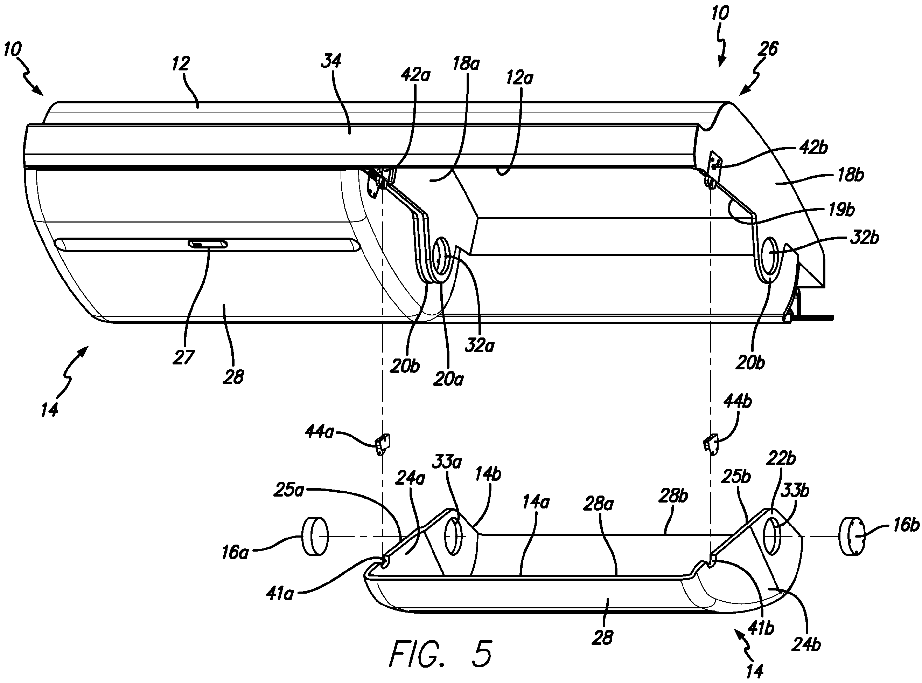

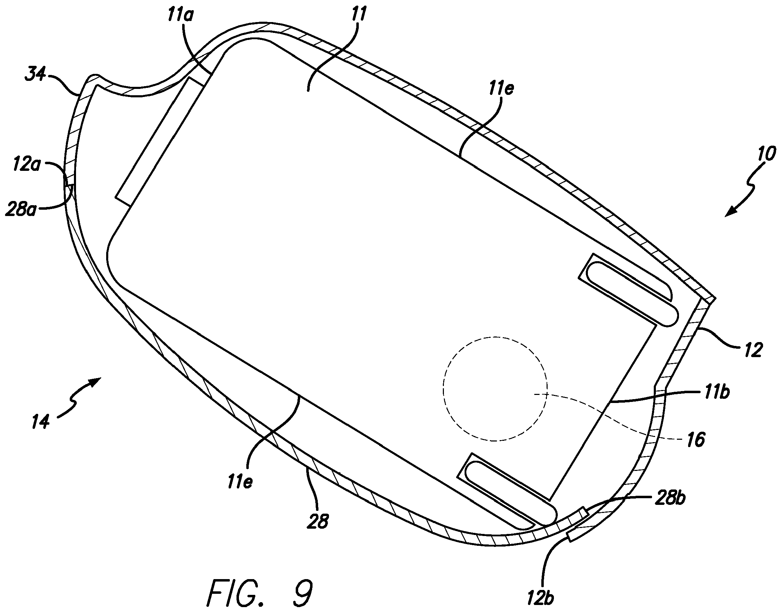

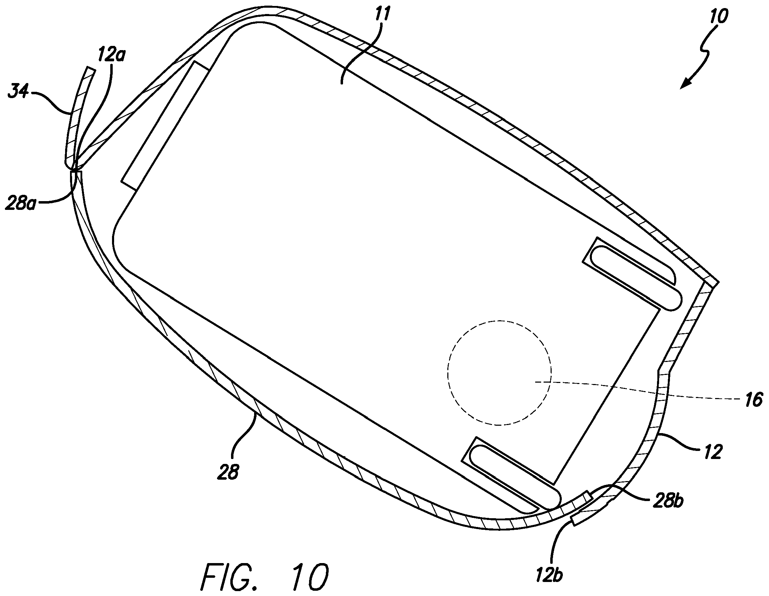

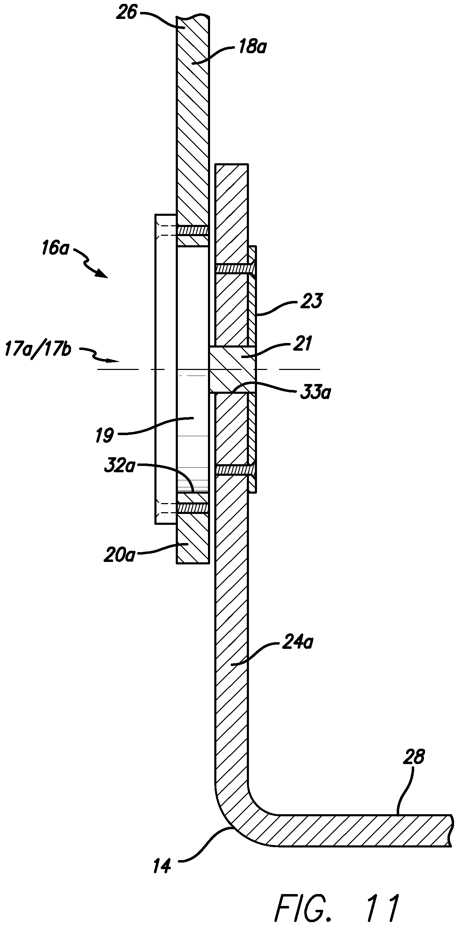

Referring now to the drawings, wherein the showings are for purposes of illustrating the present invention and not for purposes of limiting the same, FIGS. 1-16 show a aircraft storage bin 10. In particular, the invention can be used on commercial passenger aircraft. However, this is not a limitation on the present invention and the aircraft storage bin can be used elsewhere.

The present invention aircraft storage bin 10 employs a "clamshell design." In a preferred embodiment, the aircraft storage bin 10 allows as much of the entire volume inside the bin as possible to be used, increasing volume and baggage capacity when compared to the prior art. The design and structure also provides a way to integrate systems such as environmental control system ("ECS") ducting and electrical.

As will be appreciated by those skilled in the art, within the cabin of an aircraft, overhead stowage bins are typically secured to attachment points, such as hard points and overhead and side attachments. Accordingly, a description of the attachment of the pivot bin assembly will be omitted.

FIGS. 1-16 show a dual aircraft, storage bin that is essentially two aircraft storage bins 10 that can be installed together in the cabin of an aircraft. However, it will be understood by those of ordinary skill in the art, that a single and separate aircraft storage bin 10 is within the scope of the present invention and is described and claimed herein. The figures show aircraft storage bins 10 that are positioned outboard on the aircraft. However, it will be appreciated, that the aircraft storage bin 10 can be used inboard on a wide body aircraft.

In a preferred embodiment, the aircraft storage bin 10 includes a tray or bucket 14 with a first and a second pivot mechanism or pivot axle 16a and 16b on each side, and first and second side panels 18a and 18b. With respect to each aircraft storage bin 10, the first and second side panels 18a and 18b are referred to herein together as the upper housing 26. Generally, the aircraft storage bin 10 includes the upper housing 26, which includes the first and second side panels 18a and 18b, and the bucket 14. The bucket 14 and upper housing 26 cooperate to define a bin interior 36. In a preferred embodiment, the bucket 14 defines the lower portion of the bin interior 36 and the upper housing defines the upper portion of the bin interior 36. It will be appreciated that because the aircraft storage bin includes two sides that each have a pivot mechanism and associated components. Throughout the description, many of the components are denoted as a "first" component with an "a" and as a "second" component with a "b". However, because many of the components are structurally the same, in some portions of the specification and drawings, the "a" and "b" are omitted. For example, the first and second pivot mechanisms/axles are denoted as "16a" and "16b". In some portions of the specification and drawings, the pivot mechanism/axle may be denoted generally as "16".

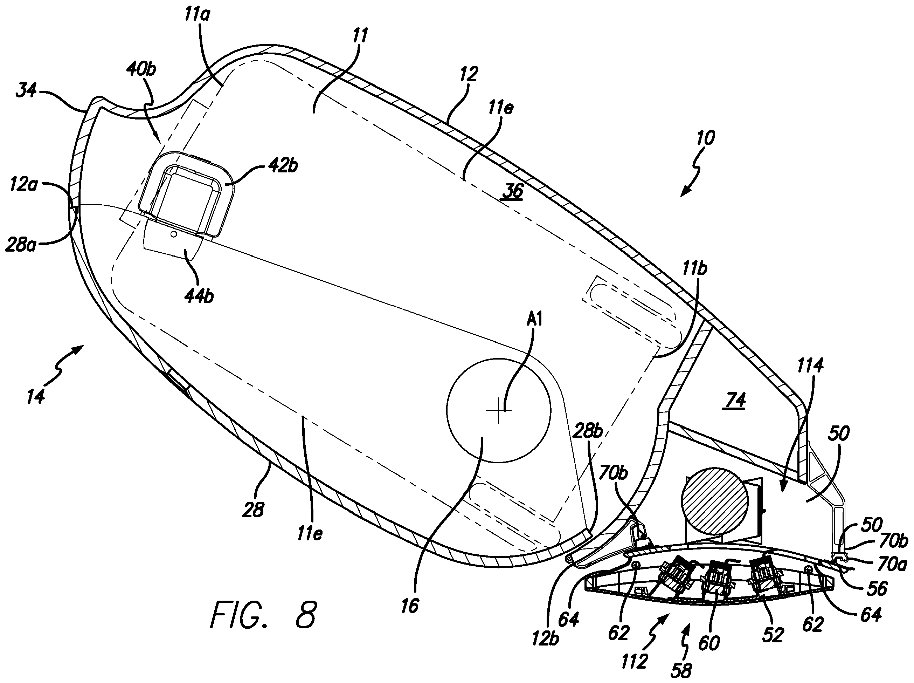

In the embodiment shown in the figures, the first and second side panels 18a and 18b are separate components. However, in another embodiment, the first and second side panels 18a and 18b (the upper housing 26) can be a unitary component. In a preferred embodiment, the aircraft storage bin 10 includes a single piece bucket 14 that includes a bottom 28 and first and second opposing sides 24a and 24b. In another embodiment, the bucket 14 can include multiple pieces, e.g., a three piece design that includes the bottom 28 and first and second opposing sides 24a and 24b as separate components. It will be appreciated by those of ordinary skill in the art that the bucket 14 and upper housing 26 provide a "clamshell design," where at least a portion of the bottom edge 19a of the first side panel 18a and the bottom edge 19b of the second side panel 18b and the front bottom edge 12a of the strongback 12 meet edge to edge with or abut the top edge 14a of the bucket 14. In a preferred embodiment, in the closed position, other than the rear top edge 28b of the bottom 28 of the bucket 14 and the area adjacent thereto and the strongback 12 (see FIG. 8), there is little to no overlap between the bucket 14 and the upper housing 26. In the embodiment shown in FIG. 1, other than the localized overlap between the first and second ears 20a and 20b and the first and second indented portions 22a and 22b, in the closed position, there is no overlap between the first and second side panels 18a and 18b and the first and second sides 24a and 24b of the bucket 14. In other words, in a preferred embodiment, the bucket 14 does not enter the upper portion of the bin interior 36, which is defined by the upper housing 26, when the bucket 14 is pivoted to the closed position. It will be appreciated by those skilled in the art, that not only does this increase stowage volume and reduce weight by eliminating redundant paneling, but also significantly decreases the number of parts needed for the entire aircraft storage bin 10, compared to the prior art.

When the bucket 14 is pivoted to the closed position, the first and second sides 24a and 24b of the bucket 14 are not received in the upper portion of the bin interior 36. In other words, in the portion of the first and second side panels 18a and 18b that do not include the first and second ears 20a and 20b and first and second indented portions 22a and 22b, the first and second top edges 25a and 25b do not pass or overlap with the first and second bottom edges 19a and 19b when the bucket 14 is pivoted to the closed position. Preferably, the first and second top edges 25a and 25b and first and second bottom edges 19a and 19b abut one another. However, an embodiment is possible where the first and second top edges 25a and 25b and first and second bottom edges 19a and 19b are horizontally separated from one another, but, in a vertical direction, the first and second top edges 25a and 25b do not pass or overlap with the first and second bottom edges 19a and 19b when the bucket 14 is pivoted to the closed position.

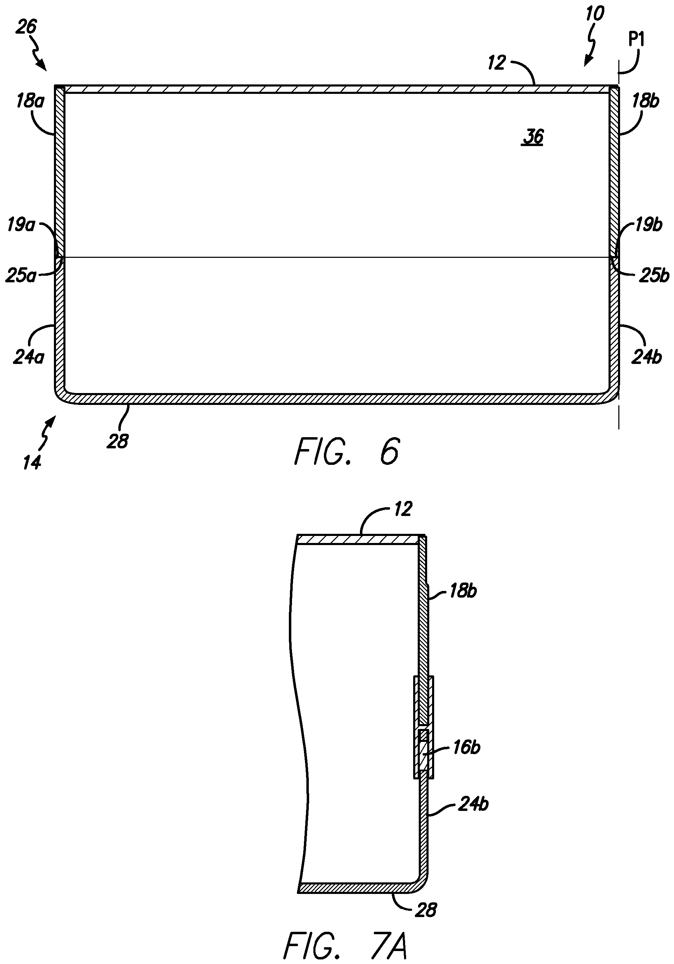

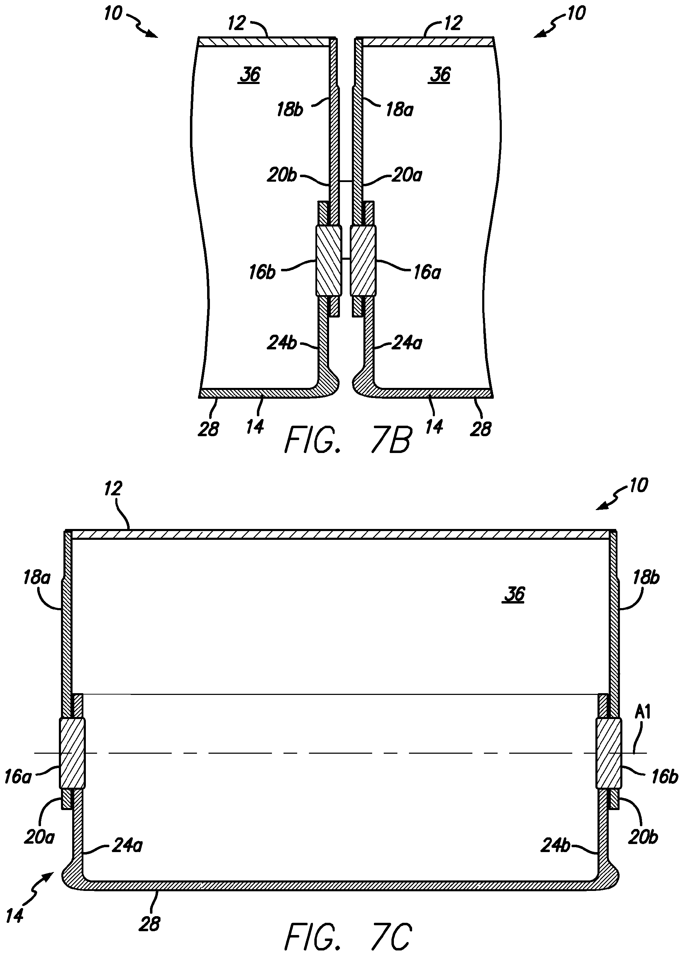

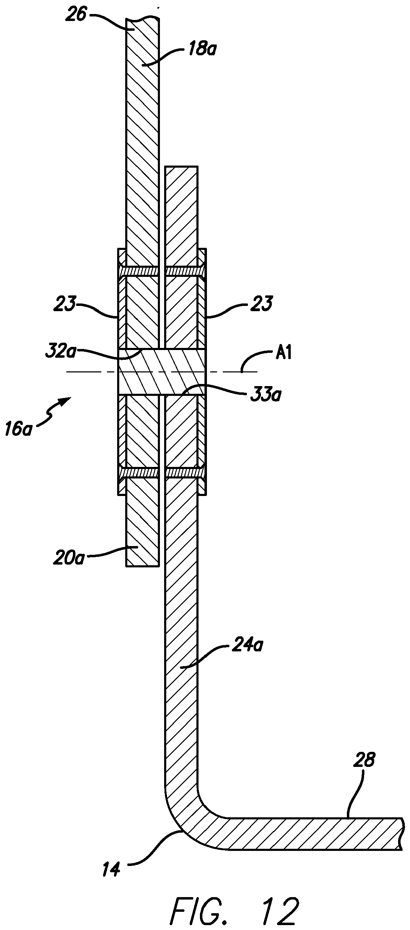

As shown in FIGS. 1-12, generally, first and second side panels 18a and 18b include first and second pivot mechanisms 16a and 16b that are operatively associated with the bucket 14, and allow the bucket 14 to pivot with respect to the upper housing 26 between an open position and a closed position. Any type of pivot mechanism that allows the bucket 14 to pivot with respect to the upper housing 26 is within the scope of the present invention. For example, the first and second pivot mechanisms 16a and 16b can be pivot axles, as shown in FIG. 12. It will be appreciated that the first and second pivot mechanisms 16a and 16b or axles pivot or rotate about a pivot axis. In a preferred embodiment, the first and second pivot mechanisms 16a and 16b are axially aligned such that the pivot axles rotate about the same axis A1, as shown in FIGS. 7C and 8.

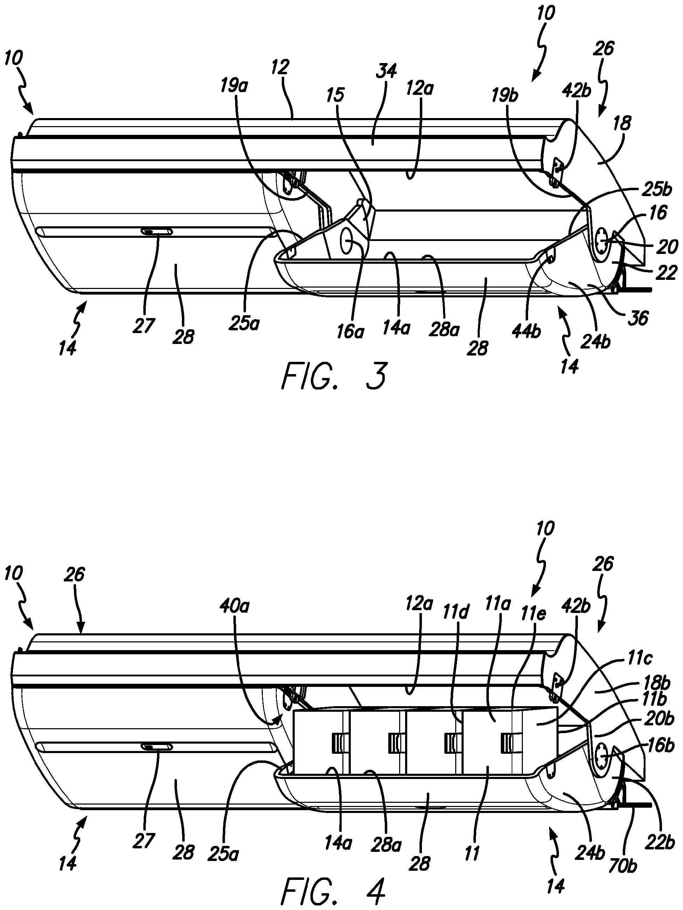

preferred embodiment, the aircraft storage bin 10 includes at least one stop member 15 (and preferably a plurality of stop members) positioned within the bin interior 36 and that maintain the bucket 14 in the open position and prevents it from pivoting too far. Any type of stop member 15 is within the scope of the present invention. For example, as shown in FIG. 3, the stop member 15 can abut the angled top edge 14b of the back of the bucket 14 and/or the rear top edge 28b of the bottom 28 of the bucket 28. The stop member 15 can be a separate component or be built in to the upper housing 26 (e.g., a ledge).

In another embodiment, a pivot axle can extend from the bucket and into an opening in the ear or vice versa. Any pair of pivot mechanisms that are axially aligned and that allow the bucket 14 to pivot with respect to the upper housing 26 is within the scope of the present invention.

For example, the present invention can utilize a prior art damper, such as a linear damper that includes a cylinder with a piston and damping fluid therein or a spring for assist (as described below).

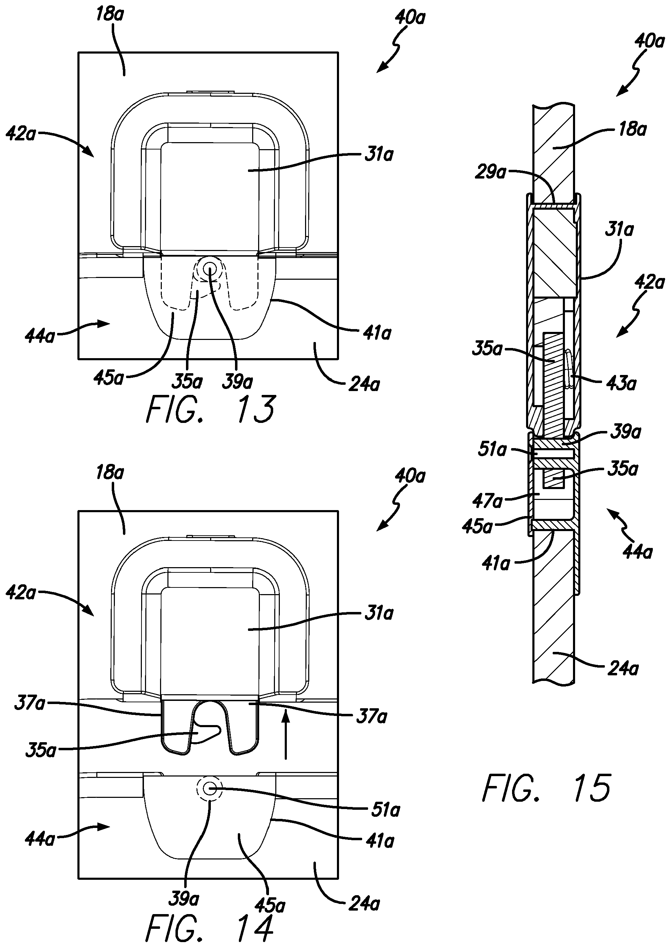

As shown in FIGS. 1-5 and, more specifically in FIGS. 13-15, in a preferred embodiment, the aircraft storage bin 10 includes first and second latch assemblies 40a and 40b operatively associated with the first and second side panels 18a and 18b and the first and second sides 24a and 24b of the bucket 14. Preferably, the first latch assembly 40a includes a first hook portion 42a and a first striker portion 44a and the second latch assembly 40b includes a second hook portion 42b and a second striker portion 44b. In a preferred embodiment, the first hook portion 42a extends downwardly from the bottom edge 19a of the first side panel 18a and the first striker portion 44a is positioned in a first recess 41a defined in the top edge 25 a of the first side 24a of the bucket 14 and the second hook portion 42b extends downwardly from the bottom edge 19b of the second side panel 18b and the second striker portion 44b is positioned in a second recess 41b defined in the top edge 25b of the second side 24b of the bucket 14.

In another embodiment, the first hook portion 42a extends upwardly from the top edge 25a of the first side 24a of the bucket 14 and the first striker portion 44a is positioned in a first recess defined in the bottom edge of the first side panel 18a, and the second hook portion 42b extends upwardly from the top edge 25b of the second side 24b of the bucket 14 and the second striker portion 44b is positioned in a second recess defined in the bottom edge of the second side panel 18b.

In another preferred embodiment, the first striker portion 44a extends downwardly from the bottom edge 19a of the first side panel 18a and the first hook portion 42a is positioned in a first recess 41a defined in the top edge 25 a of the first side 24a of the bucket 14 and the second striker portion 44b extends downwardly from the bottom edge 19b of the second side panel 18b and the second hook portion 42b is positioned in a second recess 41b defined in the top edge 25b of the second side 24b of the bucket 14.

It will be appreciated that any type of latching mechanism that allows the bucket 14 to connect to the upper housing 26 is within the scope of the present invention. Furthermore, it will be appreciated that the terms first hook portion and second hook portion refer to the entire assembly secured to the upper housing in the figures. And, the terms first striker portion and second striker portion refer to the entire assembly secured to the upper housing in the figures. The hook portion can be any latching mechanism that includes a hook or latch that mates with or latches to a striker.

FIGS. 13-15 show an exemplary embodiment of the first latch assembly 40a. It will be understood that the second latch assembly 40b includes essentially the same components. FIGS. 13 and 15 show the first latch assembly 40a in the latched position and FIG. 14 shows the first latch assembly 40a in the unlatched position. Preferably, the first hook portion 42a is mounted in a recess 29a in the first side panel 18a and includes a housing 31a, a hook 35a and guide members 37a that help guide the striker 39a (which can be secured in place by a threaded fastener 51a) into the desired position. As is known in the art, the hook 35a can be mounted on a pivot pin and include a spring 43a for urging it into the desired position. Preferably the first striker portion 44a includes a housing 45a that defines a guide recess 47a defined therein and that is spanned by the striker 39a. In use, when the bucket 14 is pivoted to the closed position, the guide members 37a are received in the guide recess 47a, and, as a result of the angle on the bottom edge of the hook 35a and the round shape of the striker 39a, the hook 35a is pivoted out of the way and the striker 39a is received fully between the guide members 37a. As a result of the spring 43a, the hook 35a is urged into the position shown in FIG. 13, and the first latch assembly 40a is now in the latched position.

It will be appreciated by those skilled in the art that by the first and second hook portions 42a and 42b extending downwardly from the first and second side panels 18a and 18b and latching to first and second striker portions 44a and 44b, which are essentially embedded in the first and second sides 24a and 24b of the bucket 14 allows the top edge 14a of the bucket 14 (i.e., top edges 25a and 25b and front top edge 28a to abut the bottom edge (bottom edges 19a and 19b and front bottom edge 12a) of the upper housing 26. In other words, the first side panel 18a, the first side 24a of the bucket 14 and the first latch assembly 40a are all lined up generally vertically and the second side panel 18b, the second side 24b of the bucket 14 and the second latch assembly 40b are all lined up generally vertically.

The first and second latch assemblies 40a and 40b shown in the figures are not a limitation on the present invention and any type of latch assembly or mechanism for securing the bucket 14 to the upper housing 26 is within the scope of the present invention.

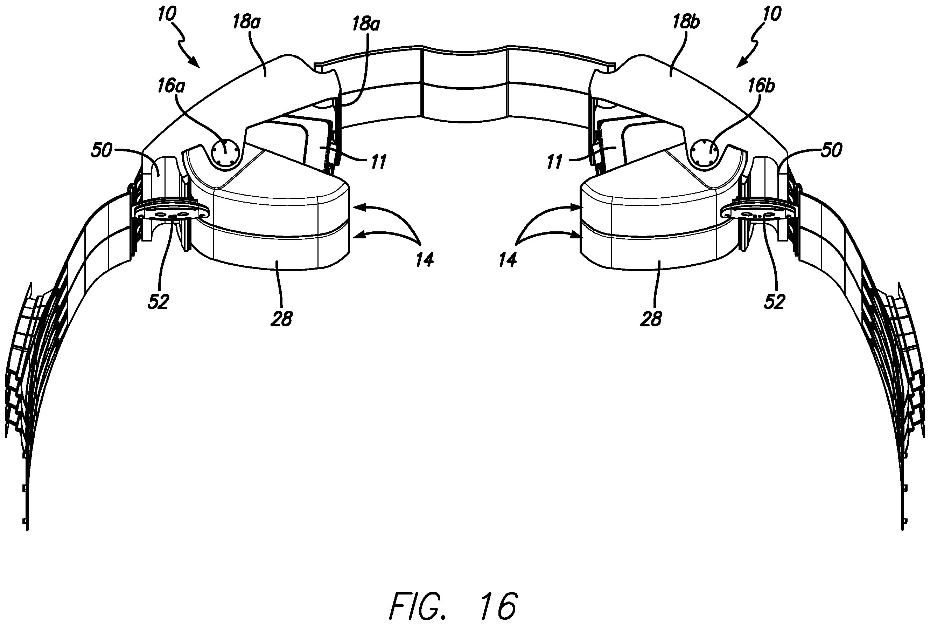

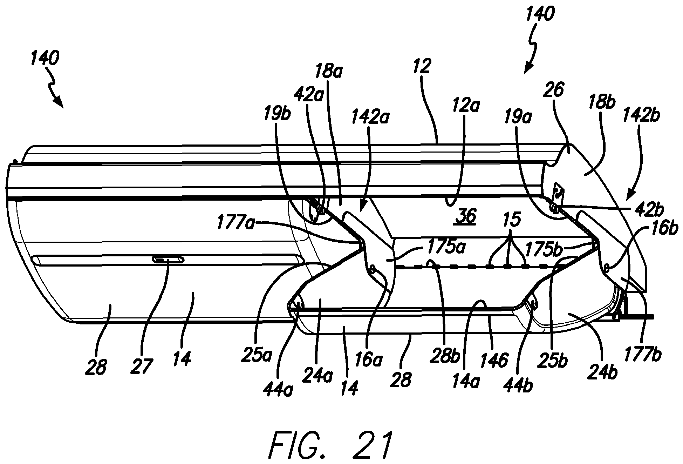

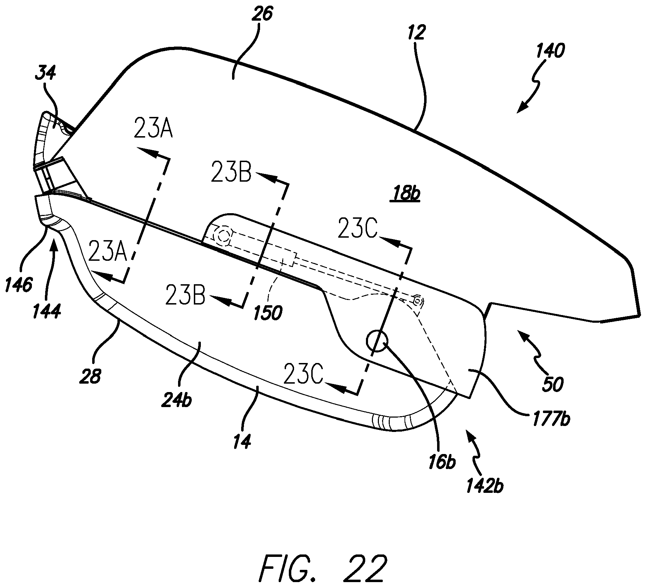

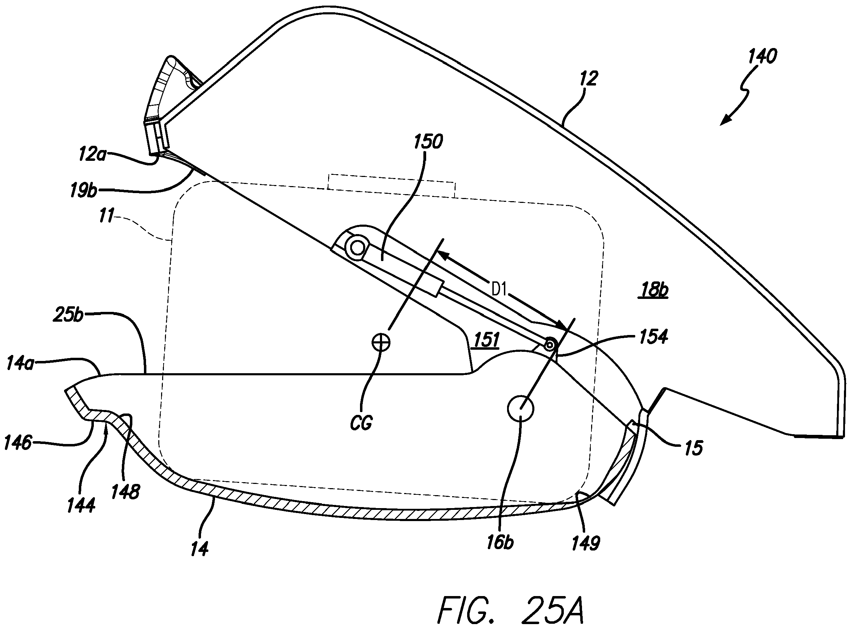

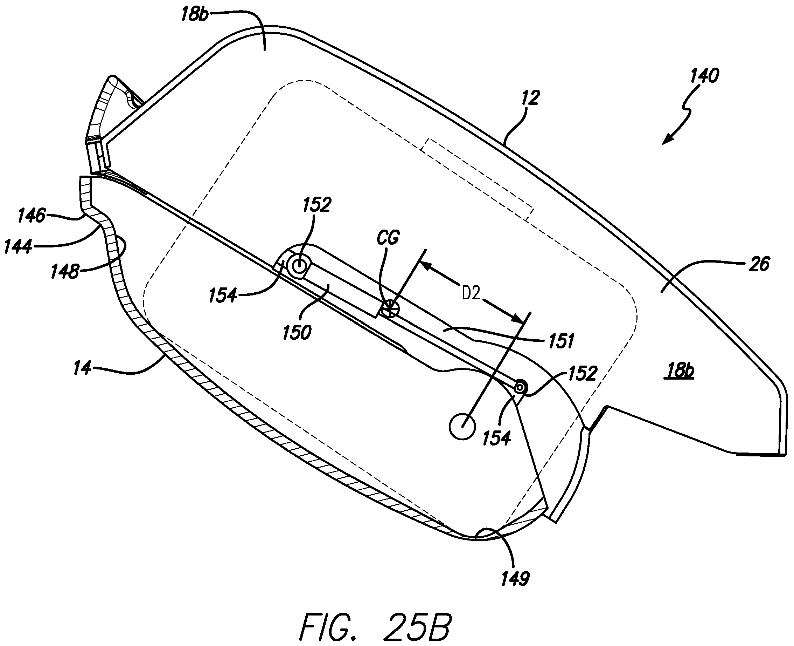

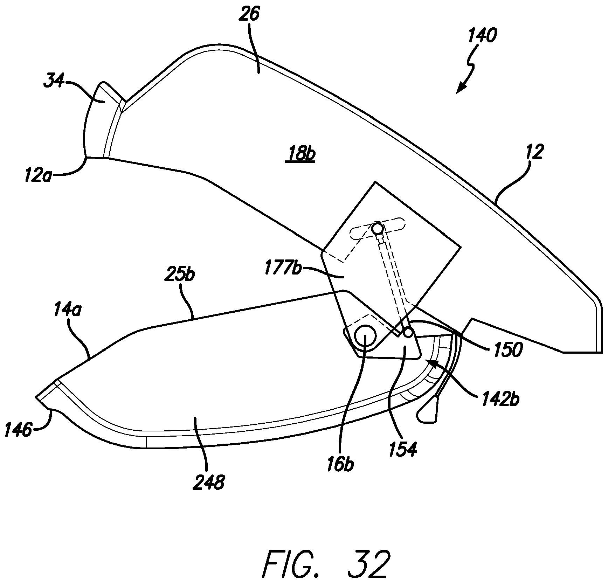

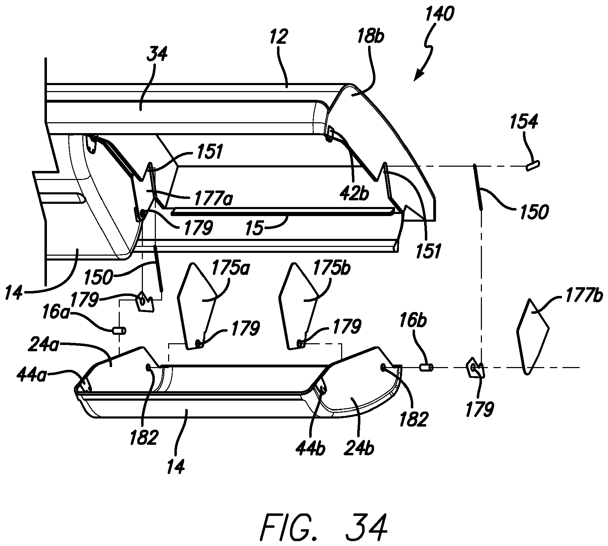

With reference to FIGS. 21-34, another embodiment of a aircraft storage bin 140 is shown aircraft storage bin 140 is similar to the aircraft storage bin 10 shown in FIGS. 16, however, the ears and corresponding indented portions are omitted and are replaced with clevis assemblies 142a and 142b that pivotally connect the upper housing 26 and the bucket 14. In other words, instead of integral ears extending downwardly from the upper housing, the clevis assemblies 142a and 142b (together with the pivot mechanisms 16a and 16b) provide the pivotal connection of the bucket to the upper housing. It will be appreciated that most of FIGS. 22-34 do not include latch assemblies. However, the latch assemblies described above and shown in connection with aircraft storage bin 10 can be used with pivot bin assembly 140. In another embodiment, other latching mechanisms can be used.

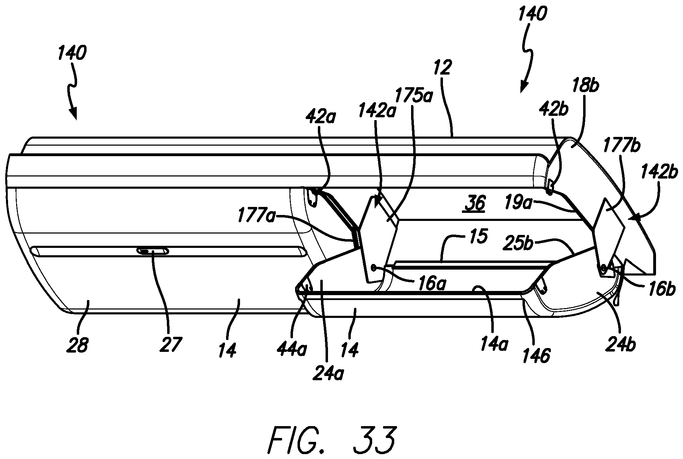

As shown in FIG. 21, aircraft storage bin 140 generally includes a tray or bucket 14 (or buckets) with a first and a second pivot mechanism or pivot mechanism 16a and 16b on each side, and first and second side panels 18a and 18b and first and second clevis assemblies 142a and 142b. With respect to each aircraft storage bin 140, the strongback 12 and first and second side panels 18a and 18b are referred to herein together as the upper housing 26. Generally, the aircraft storage bin 140 includes the upper housing 26, which includes the first and second side panels 18a and 18b, and the bucket 14. The bucket 14 and upper housing 26 cooperate to define a bin interior 36. In a preferred embodiment, the bucket 14 defines the lower portion of the bin interior 36 and the upper housing defines the upper portion of the bin interior 36. As shown in FIG. 21, in a preferred embodiment, the aircraft storage 140 includes a plurality of stop members 15 positioned on the bucket 14 that stop the bucket 14 from opening further than the preferred opening position (described below). In another embodiment, the stop members 15 can be a long strip that spans most or all of the back of the bucket 14 (see FIGS. 33-34). In another embodiment, the stop members 15 can be located elsewhere.

In the embodiment shown in the figures, the first and second side panels 18a and 18b are separate components. However, in another embodiment, the first and second side panels 18a and 18b (the upper housing 26) can be a unitary component.

As shown in FIGS. 21-34, first and second side panels 18a and 18b include first and second clevis assemblies 142a and 142b that house first and second pivot mechanisms 16a and 16b together with other components as described below. Generally, first and second pivot mechanisms 16a and 16b are operatively associated with the bucket 14, and allow the bucket 14 to pivot with respect to the upper housing 26 between an open position and a closed position. It will be appreciated that the first and second pivot mechanisms 16a and 16b or axles define a pivot axis. In a preferred embodiment, the first and second pivot mechanisms 16a and 16b are axially aligned.

As shown in FIGS. 21-22, in a preferred embodiment, aircraft storage bin 140 includes a connecting unit 150 (described more fully below) on each side thereof, that, together with first and second pivot bin mechanisms 16a and 16b are housed within clevis assemblies 142a and 142b. First and second clevis assemblies 142a and 142b are connected to the first and second side panels 18a and 18b and extend downwardly to surround a portion of the sides first and second sides 24a and 24b of bucket 14. In this embodiment, the pivot mechanisms 16a and 16b are essentially the clevis pins and the clevis is comprised of an inner plate 175 and an outer plate 177 that each include an opening 179 therein, through which the pivot mechanism/pin 16 extends.

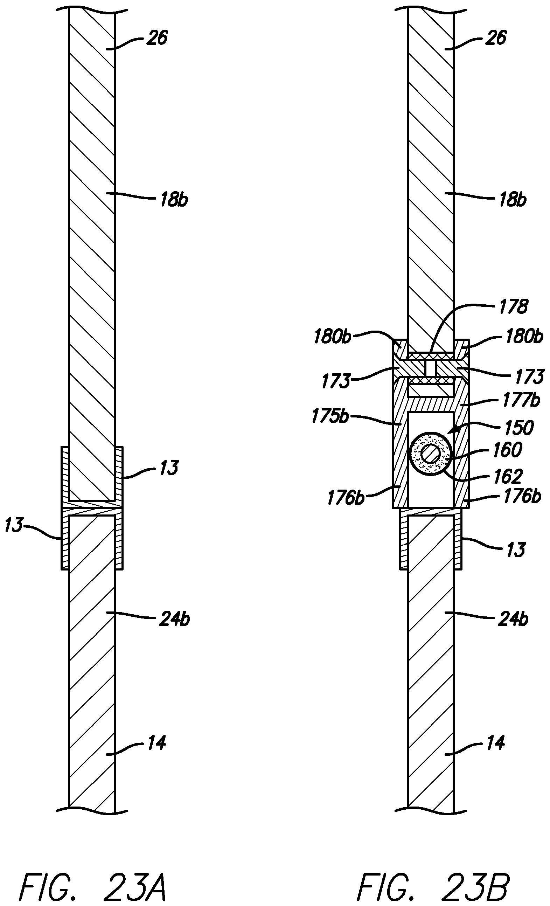

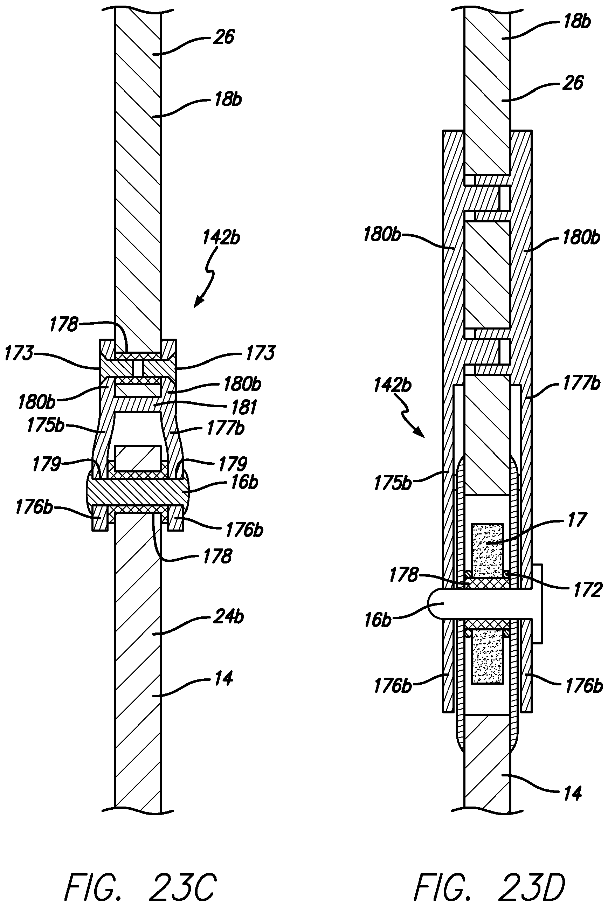

With reference to FIG. 23C, pivot axle 16b extends through lower arms 176b of the clevis assembly 142b, which, together with the clevis assembly and pivot axle on the other side of the bucket 14 provide a pivotal connection between the upper housing 26 and the bucket 14. The first and second clevis assemblies 142a and 142b can be connected to the upper housing 26 and bucket 14 by fasteners, threaded fasteners, bonding or the like. In another embodiment, the clevis assemblies 142a and 142b are integral with the upper housing 26. In another embodiment, the clevis assemblies can be integral with the bucket 14 or can be attached/secured to the bucket and the pivot axles can extend through the upper housing. As shown in FIG. 23C, in a preferred embodiment, second clevis assembly 142b includes threaded fasteners 173 that extend into a bushing 178 positioned in an opening in the side 18b. Pivot axle 16b can also extend through a bushing 178 positioned in openings 179 in the inner and outer plates 175 and 177 and an opening 182 in the side of the bucket 14. In another embodiment, bushing 178 can be omitted. It will be appreciated that the clevis assemblies 142a and 142b (and the inner and outer plates 175 and 177 thereof) can each be a unitary structure or they can be a plurality of plates that together form the clevis assembly. As shown in FIG. 23C, the clevis assembly can include a horizontal plate 181 that connects the inner and outer plates 175 and 177. In another embodiment, the pivot axle can be unitary with or secured to the inside surfaces of the inner and outer plates/lower arms or at least one of the inner or outer plates/lower arms. In another embodiment, the clevis assemblies can include a single inner or outer plate that extends between and is secured to the upper housing and the bucket.

As shown in FIG. 23D, in an embodiment that includes the rotary damper 17 and/or an assist spring 172 (described below), these components are also housed within the clevis assembly 142b. FIG. 23D also shows clevis assembly 142b including connectors that are unitary with the inside surface of upper arms 180b of the clevis.

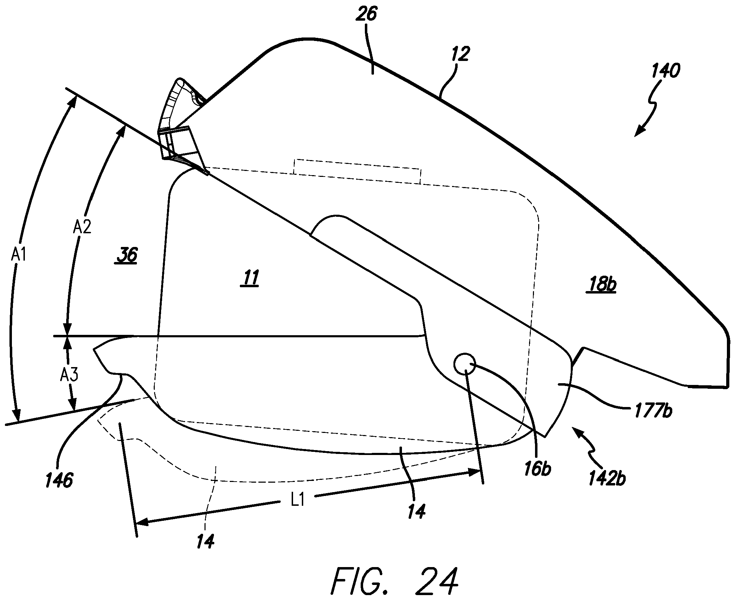

In a preferred embodiment, the aircraft storage bin 140 includes a system that provides a user with assistance in closing an open bucket 14 with a predetermined minimal amount of force, and may also provide the means for a fully loaded closed bucket 14 to open in a controlled manner (damped). This can be accomplished in several ways. FIGS. 24-30 show a preferred embodiment for providing these features. Within the aircraft industry certain dimensions, weights, forces and other measurements, etc. are required or desired for opening and closing overhead bins and for the forces necessary for particular sized men and women to close the bins. Such considerations are taken into account in the description herein. However, it will be appreciated that the particular numbers, measurements, dimensions, etc. set forth herein are only exemplary and not limiting on the present invention.

FIG. 24 shows a side view of aircraft storage bin 140 in the open position. Two different open positions for the bucket 14 are shown. This is referred to herein as a two stage opening bucket or bin. The position shown in the solid lines is the bucket 14 in the open position when the pivot bin is empty (referred to herein as the "intermediate open position"). The position shown in dotted lines is the bucket 14 in the open position when the aircraft storage bin is loaded beyond a predetermined weight (referred to herein as the "open position"). The bucket 14 can open fully to a certain angle or arc, which is shown in FIG. 24 as A1. When the bucket 14 is open to A1, it is in the open position (stop members 15 maintain the bucket 14 in the open position). When the bucket 14 is in the intermediate open position (which is a resting position, not just a position taken as a "snapshot" while the bin is opening) it has moved through an angle or arc labeled A2 in FIG. 24. The angle or arc between the intermediate open position and the open position is shown as A3 in FIG. 24. In an exemplary embodiment, A1 is 42°, A2 is 31° and A3 is 11°. However, these angles are not a limitation on the invention. For example, in another exemplary embodiment, A1 can be between 30° and 60°, A2 can be between 20° and 40° and A3 can be between 5° and 20°. An assist spring or springs can be used to hold the bucket 14 in the intermediate open position, as will be described further below. In another embodiment, the two stage opening can be omitted and the bucket 14 can open all the way through arc A1 when opened.

In a preferred embodiment, the bin is damped when opened. This prevents the bucket 14 from slamming open as a result of gravity. Damping can be provided in several ways, as described below.

In a preferred embodiment, a closing assist force is provided along at least a portion of the closing arc of the bucket 14 (shown as an exemplary A3 in FIG. 24). As a result, when the bucket 14 is empty, the bucket 14 will be positioned in the intermediate open position. However, when the bucket 14 is loaded with a predetermined weight of luggage or when a user pulls down with enough force to overcome the spring force, the bucket 14 will be positioned in the open position. When a user pushes to close the bucket 14, the closing assist force created by the preloaded spring will help along arc A3, which is the portion of the closing arc that requires the most force by a user.

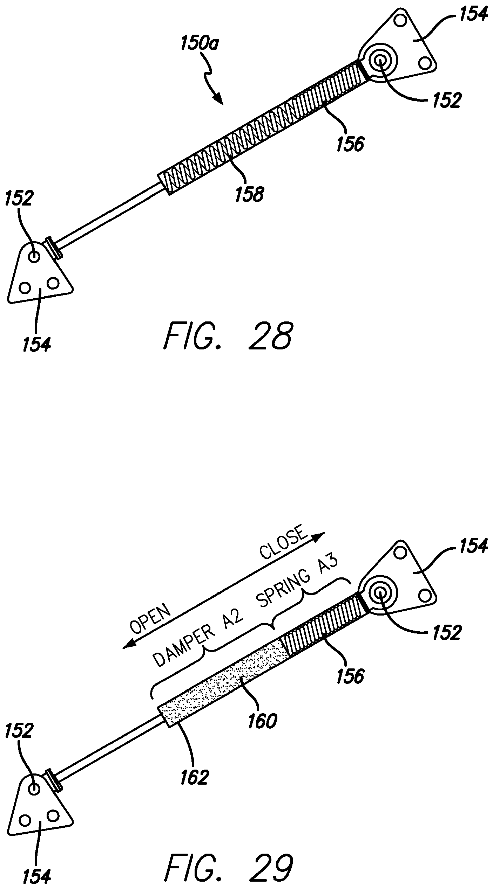

FIGS. 28-29 show schematic views of connector units 150a and 150b. Both connector units 150a and 150b include pivotal connections 152 (e.g. ball joints) at the opposite ends thereof that connect the unit to brackets 154 or the like that is located on the bucket 14 and the side wall 18 respectively. In use, the connecting units 150 pivot about pivotal connections 152 as necessary and lengthen or contract as necessary during opening or closing of the bucket 14. Connecting unit 150a includes two different springs 156 and 158 that are used to provide closing assist over two different portions of the closing arc A1. In another embodiment, a variable or two stage spring can be used to provide the same result. These two different portions may coincide with arcs A2 and A3 or they may not. In another embodiment, connecting unit 150a can also include damping capability. Connecting unit 150b includes closing assist over at least a portion of closing arc A1 and also provides damping during opening of the bucket 14. As shown in FIG. 29, in a preferred embodiment, spring assist is provided over closing during bucket travel along A3 and damping while opening over at least A2 (and preferably all of A1). Damping can be provided in any known way. In an exemplary embodiment, damping is provided by fluid 160 disposed within a cylinder 162, as shown in FIG. 29. Pneumatic or gas cylinders can also be used.

As will appreciated by those of ordinary skill in the art, closing of the bucket 14 is most difficult at the beginning of the process (e.g., A3, as shown in FIG. 24). Therefore, the connecting units 150 preferably provide a spring lift assist during at least this portion of the closing process.

It will be appreciated that connecting units 150 are provided on both sides of the bucket 14 and can be connected to the bucket 14 and upper housing 26 by any connection method or interface and preferably using brackets 154 with an opening therethrough or a stud extending therefrom.

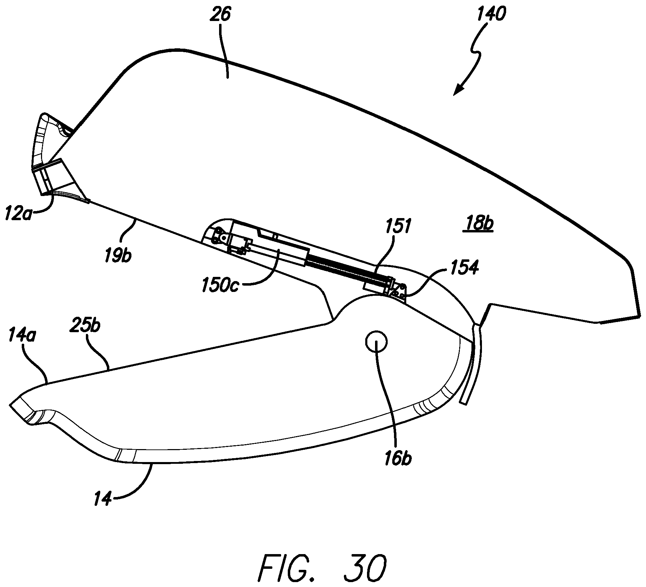

In another preferred embodiment, as shown in FIG. 30, the aircraft storage bin 140 can include a powered lift assist connecting unit 150c, which provides powered lift assist over at least a portion of or the entire closing arc A1. Powered opening/damping can also be provided. Preferably, when powered lift assist is desired, a powered lift assist connecting unit 150c is used on one side of the bucket 14 and a connecting unit 150 with only damping capability is used on the other side of the bucket 14. In another embodiment, powered lift assist connecting units 150c can be used on both sides of the bucket 14. It will be appreciated that all of the connecting units 150a, 150b and 150c (and any connecting units 150 with only damping capability) are all interchangeable and use the same interface (e.g., brackets 154) to connect to the bucket 14 and upper housing 26. In an embodiment, the brackets 154 may have to be moved to accommodate the powered lift assist connecting unit 150c as opposed to the other connecting units 150. It will be appreciated that the powered lift assist connecting unit 150c is in electrical communication with the release button 27 of the associated bucket 14. In another embodiment, a separate button for closing can be provided.

FIG. 23D shows another embodiment that provides damping of the opening bucket and/or mechanical/spring assistance in closing the bucket 14. FIG. 23D is a cross-section that is taken at the same cut line as FIG. 23C in a pivot bin assembly with the embodiment now being described. As shown, the clevis assembly 142b includes at least one assist spring 172. In a preferred embodiment, the assist spring 172 is a coil spring that is co-axial with pivot mechanism 16. In use, at least one end of the spring abuts a stop such that when the bucket 14 is opened passed a predetermined point (e.g., after A2), the spring 172 is preloaded. In the example shown in FIG. 24, spring 172 holds the empty bucket in the intermediate open position. Once a user pulls down or a bag of sufficient weight is placed on the bin, the bucket opens further and spring 172 is preloaded. This provides a user closing the bin with assistance. It will be appreciated that once the bucket 14 is loaded, the bucket 14 only moves between the open and closed positions. In this configuration it bypasses the intermediate open position as the weight of the luggage overcomes the spring force.

In another embodiment, the assist spring 172 can be a spiral spring or other type of spring. This embodiment can include the same benefits as those discussed above with respect to the various connecting units 150. For example, coil spring 172 can provide closing assist over a portion of the closing arc or over the entire closing arc or a variable/two stage spring or multiple springs can be used to provide differing amounts of closing force assistance over the closing arc. For example, in this embodiment, closing assist can be provided during one portion of the closing arc by coil springs 172 and during another portion of the closing arc by spring 156 in connecting unit 150.

In summary, the aircraft storage bin 140 can include a) damping capability, b) damping capability and closing assist, c) damping capability and two or more stage closing assist, or d) damping capability and powered lift assist.

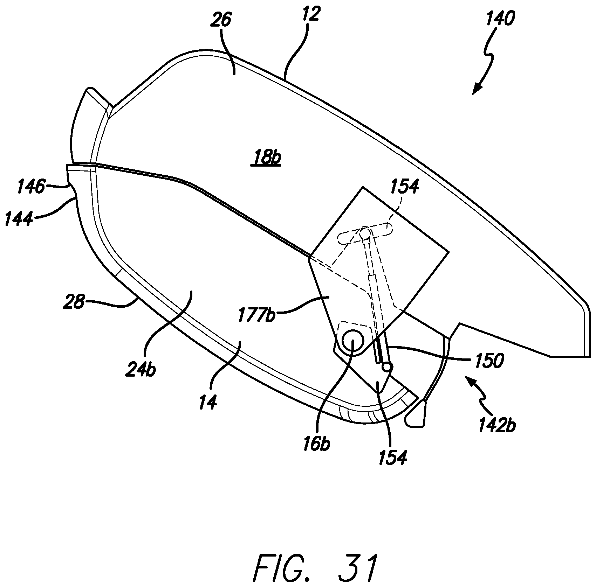

FIGS. 31-34 show another arrangement of the clevis assemblies 142a and 142b together with the cut out 151 in the side 18b of the upper housing 26 and the connecting unit 150. In this embodiment, inner plates 175a and 175b and outer plates 177a and 177b and cut outs 151 are shaped differently and connecting units 150 are oriented differently. Also, the pivot mechanisms 16a and 16b extend through the lower brackets 154. However, this embodiment operates the same as that described above.

Generally, when a two stage opening bucket/bin is in use, when the latches are released, the damping capability of the aircraft storage bin 10 or 140 allows damped opening of the bucket 14 to an angle (the intermediate open position) that provides easy access for most luggage, even when empty. Furthermore, compared to the prior art, in the intermediate open position, the aircraft storage bins 10 or 140 increase the headroom in the cabin when the buckets 14 are open and empty (in the intermediate open position). Next, once passenger luggage 11 is positioned on the lip of the bucket 14 or once a typical bag/ luggage is in the bucket 14, the bucket 14 will drop to the open position in a controlled/damped manner. This allows for placement of all luggage sizes.

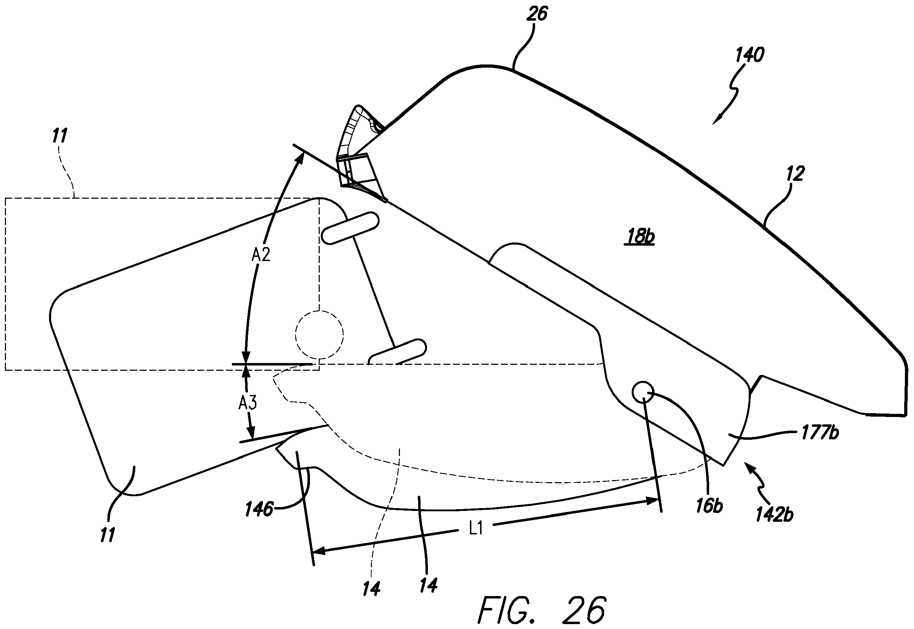

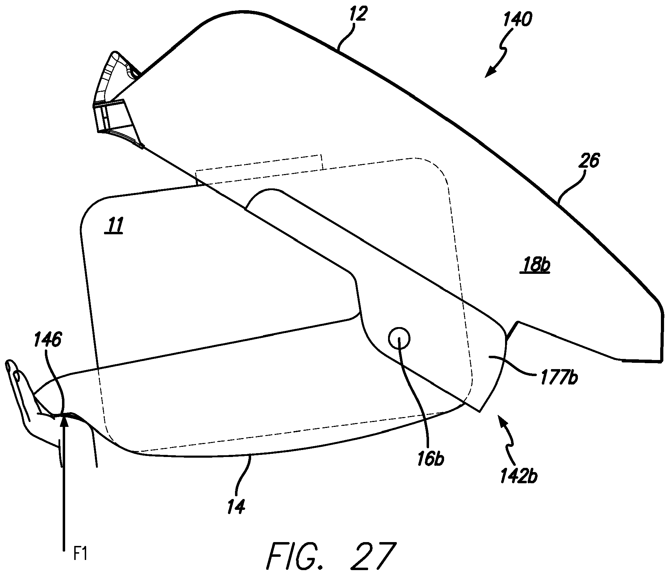

With reference to FIGS. 24-27, an example of an operation cycle of loading and unloading a two stage opening bucket or bin with luggage before and after a flight will now be described. As discussed above, all angles, weights, loads, dimensions, times, etc. used herein are exemplary. First, the release button 27 of an empty bucket 14 is pressed by a user. The bucket 14 opens 31° (A2) at a damped rate to the intermediate open position (see the bucket in dashed lines in FIG. 26). The springs (springs 156 in the connector assemblies and/or coil springs 172) are now ready to be engaged. The user then places luggage 11 on the lip of the bucket 14 (or pulls down with their hand). The potential energy from the luggage 11 lowers the bucket 14 through an additional 11° (A3) to the open position, which displaces the springs 156, 158 and/or 172 on both sides of the bucket 14 and loads them with enough energy to create 1.80 m-Kg (13 ft-lbs) of torque (for example). The user then slides their luggage fully into the bucket 14 (see FIG. 27). To accommodate more luggage, the users bag is preferably turned so that it rests on a side. In a preferred embodiment, the bucket 14 is damped while it is lowered.

Assuming other luggage has now been placed in the same bucket 14, in this scenario, the bucket 14 is now completely filled and the luggage weighs approximately 39.92 Kg (88 lbs) in total. As shown in FIG. 27, a user now pushes approximately vertically on the closing surface 146 with approximately 12.25 Kg (27 lbs) of force (see arrow F1). The springs 156 and/or 172 apply an assist load of 3.18 Kg (7 lbs) over the first 11° of the bucket 14 closing arc (A3). The user then continues pushing the bucket 14 closed through the remaining 31° (A2). In the embodiment with a variable spring or with a second spring 158, assist can also be provided over some or all of the remainder of the closing arc. As can be seen in FIG. 27, F1 is approximately vertical. With the orientation of the bucket 14 shown in this embodiment, the closing surface 146 is configured such that it is parallel or close to parallel with the ground. This prompts a user to press up in the direction of F1, which makes closing the bucket easier than pushing elsewhere on the bucket or pushing on a surface that is at a steep angle compared to horizontal.

After the flight (or at any time during the flight), to open the bucket 14, the user presses the release button 27 and the fully loaded bucket 14 opens the full 42° (A1) to the open position at a damped rate. The user can then pull their luggage 11 from the fully opened bucket 14.

In an exemplary embodiment, the bucket 14 free falls from the closed to open position in 2.5±1 seconds while loaded with luggage anywhere between 0 - 36.3 kg (0-80 lbs) in weight. In the exemplary scenarios given herein the bucket 14 itself weighs approximately 4.53 Kg (10 lbs) This results in a combined weight range of 4.53 - 40.82 Kg (10 - 90 lbs) (but could be higher). In an exemplary closing force scenario it is desired for the closing force (provided by the user) not to exceed 12.25 Kg (27 lbs). In order to achieve this, a closing assist force of approximately 3.18 Kg (7 lbs) is provided over the first 11° (A3) of the bucket 14 closing motion. This equates to approximately 1.80 m-Kg (13 ft-lbs) of torque at the pivot point.

As shown in FIG. 26, the two stage opening bucket also provides for two different orientations for placing standard luggage in the bin interior 36. In a preferred embodiment, A2 is dimensioned such that when the bucket 14 is in the intermediate open position, a bag can be placed in the bucket 14 on its top or bottom, as shown in dashed lines in FIG. 26 and A1 is dimensioned such that when the bucket 14 is in the open position, a bag can be placed in the bucket 14 on its side, as shown in solid lines in FIG. 26. In another example, when the bucket 14 is in the intermediate open position, a user can place their bag on the lip of the bucket 14 on its top or bottom, allow the weight of the bag to open the bin to the open position and then turn the bag on its side and slide it all the way into the bin interior 36. It will be appreciated that the two stage opening capability can be applied to other overhead bins, e.g., bins that open by translating or moving downwardly as opposed to pivoting open.

## Claims

1. An aircraft storage bin (140) comprising:
an upper housing (26) that includes first and second side panels (18a, 18b), on which are arranged a first clevis assembly (142a) that includes at least one of a first inner plate (175a) and a first outer plate (177a), and a second clevis assembly (142b) that includes at least one of a second inner plate (175b) and a second outer plate (177b),
a bucket (14) that includes a bottom (28) and first and second sides (24a, 24b), wherein the bucket cooperates with the upper housing to define a bin interior,
a first pivot mechanism (16a) operatively associated with the bucket and the first clevis assembly, and
a second pivot mechanism (16b) operatively associated with the bucket and the second clevis assembly, wherein the first and second pivot mechanisms define a pivot axis (A1), and wherein the bucket pivots about the pivot axis with respect to the upper housing between an open position and a closed position.

2. An aircraft storage bin (140) according to claim 1, wherein
the first side (24a) of the bucket (14) is a first side wall;
the second side (24b) of the bucket (14) is a second side wall;
the first clevis assembly (142a) extends between the first side panel (18a) of the upper housing (26) and the first side wall of the bucket;
the second clevis assembly (142b) extends between the second side panel (18b) of the upper housing and the second side wall of the bucket.

3. An aircraft storage bin (140) according to claim 1, wherein
the aircraft storage bin is a pivot bin assembly configured to receive luggage and be positioned in the interior of an aircraft;
the upper housing (26) includes a strongback (12);
the first clevis (142a) assembly is secured to and extends downwardly from the first side panel (18a);
the second clevis assembly (142b) is secured to and extends downwardly from the second side panel (18b);
the first pivot mechanism (16a) is a first pivot axle;
the second pivot mechanism (16b) is a second pivot axle; and
first and second pivot mechanisms (16a, 16b) are axially aligned along the pivot axis (A1).

4. The aircraft storage bin (140) of any preceding claim further comprising a first connecting unit (150a, 150c) having a first end pivotally connected to the first side (24a) of the bucket (14) and a second end pivotally connected to the first side panel (18a), and a second connecting unit (150b, 150c) having a first end pivotally connected to the second side (24b) of the bucket (14) and a second end pivotally connected to the second side panel (18b), wherein the first and second connecting units provide one or both of damping when the bucket pivots to the open position and assistance when the bucket pivots to the closed position.

5. The aircraft storage bin (140) of claim 4 wherein the first clevis assembly (142a) includes both the first inner plate (175a) and the first outer plate (177a), wherein the first pivot mechanism (16a) extends between the first inner plate and the first outer plate, wherein the second clevis assembly (142b) includes both the second inner plate (175b) and the second outer plate (177b), wherein the second pivot mechanism (16b) extends between the second inner plate and the second outer plate, and wherein the first connecting unit (150a, 150c) is positioned between the first inner plate and the first outer plate and the second connecting unit (150b, 150c) is positioned between the second inner plate and the second outer plate.

6. The aircraft storage bin (140) of any preceding claim wherein at least one of the first or second pivot mechanisms (16a, 16b) includes an assist spring (172) associated therewith, and wherein the assist spring (172) is preloaded when the bucket (14) is pivoted to the open position; and, optionally, wherein the assist spring (172) is a coil spring that is coaxial with the first or second pivot mechanism.

7. The aircraft storage bin (140) of claim 5 wherein at least one of the first or second connecting units (150a, 150b, 150c) includes an assist spring associated therewith, and wherein the assist spring is preloaded when the bucket is pivoted to the open position.

8. The aircraft storage bin (140) of any preceding claim wherein the upper housing (26) includes a stop member (15), and wherein the bottom (28) of the bucket (14) includes a rear top edge (14b) that abuts the stop member when the bucket is in the open position.

9. The aircraft storage bin (140) of claim 3 or claim 1, wherein the first pivot mechanism (16a) extends through the first side (24a) of the bucket (14) and between the first inner and outer plates (175a, 177a) and the second pivot mechanism (16b) extends through the second side (24b) of the bucket and between the second inner and outer plates (175b, 177b).

10. The pivot bin assembly (140) of claim 9 further comprising first and second latch assemblies (40a, 40b), wherein the first latch assembly (40a) is associated with the first side panel (18a) and the first side (24a) of the bucket (14), and wherein the second latch assembly (40b) is associated with the second side panel (18b) and the second side (24b) of the bucket.

11. The pivot bin assembly (140) of claim 10 wherein the first latch assembly (40a) includes a first hook portion and a first striker portion, wherein one of the first hook portion (42a) and the first striker portion (44a) is associated with the first side panel (18a) and the other of the first hook portion (42a) and the first striker portion (44a) is associated with the first side (24a) of the bucket, wherein the second latch assembly (40b) includes a second hook portion (42b) and a second striker portion (44b), wherein one of the second hook portion and the second striker portion is associated with the second side panel (18b) and the other of the second hook portion and the second striker portion is associated with the second side (24b) of the bucket.

## Patentansprüche

1. Flugzeugablagebehälter (140), Folgendes beinhaltend:
ein oberes Gehäuse (26), welches erste und zweite Seitenpaneele (18a, 18b) beinhaltet, an welchen folgende Elemente angeordnet sind:
eine erste Bügelanordnung (142a), beinhaltend mindestens eine von einer ersten inneren Platte (175a) und einer ersten äußeren Platte (177a), und
eine zweite Bügelanordnung (142b), beinhaltend mindestens eine von einer zweiten inneren Platte (175b) und einer zweiten äußeren Platte (177b),
einen Eimer (14), beinhaltend einen Boden (28) und erste und zweite Seiten (24a, 24b), wobei der Eimer mit dem oberen Gehäuse zusammenarbeitet, um ein Behälterinneres zu bilden,
einen ersten Schwenkmechanismus (16a), funktionsfähig verbunden mit dem Eimer und der ersten Bügelanordnung, und
einen zweiten Schwenkmechanismus (16b), funktionsfähig verbunden mit dem Eimer und der zweiten Bügelanordnung, wobei die ersten und zweiten Schwenkmechanismen eine Schwenkachse (A1) definieren, und wobei der Eimer um die Schwenkachse in Bezug auf das obere Gehäuse zwischen einer geöffneten Position und einer geschlossenen Position schwenkt.

2. Flugzeugablagebehälter (140) nach Anspruch 1, bei welchem
die erste Seite (24a) des Eimers (14) eine erste Seitenwand ist;
die zweite Seite (24b) des Eimers (14) eine zweite Seitenwand ist;
die erste Bügelanordnung (142a) sich zwischen dem ersten Seitenpaneel (18a) des oberen Gehäuses (26) und der ersten Seitenwand des Eimers erstreckt;
die zweite Bügelanordnung (142b) sich zwischen dem zweiten Seitenpaneel (18b) des oberen Gehäuses und der zweiten Seitenwand des Eimers erstreckt.

3. Flugzeugablagebehälter (140) nach Anspruch 1, bei welchem
der Flugzeugablagebehälter eine Schwenkbehälteranordnung ist, die konfiguriert ist, um Gepäck aufzunehmen und im Innern eines Flugzeugs positioniert zu werden;
das obere Gehäuse (26) eine Verstärkung (12) beinhaltet;
die erste Bügelanordnung (142a) am ersten Seitenpaneel (18a) gesichert ist und sich von diesem nach unten erstreckt;
die zweite Bügelanordnung (142b) am zweiten Seitenpaneel (18b) gesichert ist und sich von diesem nach unten erstreckt;
der erste Schwenkmechanismus (16a) eine erste Schwenkachse ist;
der zweite Schwenkmechanismus (16b) eine zweite Schwenkachse ist; und
die ersten und zweiten Schwenkmechanismen (16a, 16b) axial entlang der Schwenkachse (A1) ausgerichtet sind.

4. Flugzeugablagebehälter (140) nach einem der vorhergehenden Ansprüche, zudem beinhaltend eine erste Verbindungseinheit (150a, 150c) mit einem ersten Ende, das schwenkbar mit der ersten Seite (24a) des Eimers (14) verbunden ist und einem zweiten Ende, das schwenkbar mit dem ersten Seitenpaneel (18a) verbunden ist, und eine zweite Verbindungseinheit (150b, 150c) mit einem ersten Ende, das schwenkbar mit der zweiten Seite (24b) des Eimers (14) verbunden ist und einem zweiten Ende, das schwenkbar mit dem zweiten Seitenpaneel (18b) verbunden ist, wobei die ersten und zweiten Verbindungseinheiten eine oder beide der Funktionen bieten, bestehend aus Dämpfung, wenn der Eimer in die geöffnete Position schwenkt und, und aus Unterstützung, wenn der Eimer in die geschlossene Position schwenkt.

5. Flugzeugablagebehälter (140) nach Anspruch 4, bei welchem die erste Bügelanordnung (142a) sowohl die erste innere Platte (175a) als auch die erste äußere Platte (177a) beinhaltet, wobei der erste Schwenkmechanismus (16a) sich zwischen der ersten inneren Platte und der ersten äußeren Platte erstreckt, wobei die zweite Bügelanordnung (142b) sowohl die zweite innere Platte (175b) als auch die zweite äußere Platte (177b) beinhaltet, wobei der zweite Schwenkmechanismus (16b) sich zwischen der zweiten inneren Platte und der zweiten äußeren Platte erstreckt, und wobei die erste Verbindungseinheit (150a, 150c) zwischen der ersten inneren Platte und der ersten äußeren Platte positioniert ist und die zweite Verbindungseinheit (150b, 150c) zwischen der zweiten inneren Platte und der zweiten äußeren Platte positioniert ist.

6. Flugzeugablagebehälter (140) nach einem der vorhergehenden Ansprüche, bei welchem mindestens einer des ersten und des zweiten Schwenkmechanismus (16a, 16b) eine Unterstützungsfeder (172) beinhaltet, die hiermit verbunden ist, und wobei die Unterstützungsfeder (172) vorgespannt wird, wenn der Eimer (14) in die geöffnete Position geschwenkt wird; und, optionsweise, wobei die Unterstützungsfeder (172) eine Wendelfeder ist, die koaxial mit dem ersten oder zweiten Schwenkmechanismus ausgerichtet ist.

7. Flugzeugablagebehälter (140) nach Anspruch 5, bei welchem mindestens eine der ersten und der zweiten Verbindungseinheit (150a, 150b, 150c) eine hiermit verbundene Unterstützungsfeder beinhaltet, und wobei die Unterstützungsfeder vorgespannt wird, wenn der Eimer in die geöffnete Position geschwenkt wird.

8. Flugzeugablagebehälter (140) nach einem der vorhergehenden Ansprüche, bei welchem das obere Gehäuse (26) ein Stoppglied (15) beinhaltet, und bei welchem der Boden (28) des Eimers (14) eine hintere Oberkante (14b) beinhaltet, die am Stoppglied anschlägt, wenn der Eimer in der geöffneten Position steht.

9. Flugzeugablagebehälter (140) nach Anspruch 3 oder 1, bei welchem der erste Schwenkmechanismus (16a) sich durch die erste Seite (24a) des Eimers (14) und zwischen den ersten inneren und äußeren Platten (175a, 177a) erstreckt und der zweite Schwenkmechanismus (16b) sich durch die zweite Seite (24b) des Eimers und zwischen den zweiten inneren und äußeren Platten (175b, 177b) erstreckt.

10. Schwenkbehälteranordnung (140) nach Anspruch 9, weiterhin beinhaltend erste und zweite Schnappanordnungen (40a, 40b), bei welcher die erste Schnappanordnung (40a) mit dem ersten Seitenpaneel (18a) und der ersten Seite (24a) des Eimers (14) verbunden ist, und bei welchem die zweite Schnappanordnung (40b) mit dem zweiten Seitenpaneel (18b) und der zweiten Seite (24b) des Eimers verbunden ist.

11. Schwenkbehälteranordnung (140) nach Anspruch 10, bei welcher die erste Schnappanordnung (40a) einen ersten Hakenabschnitt und einen ersten Schließerabschnitt beinhaltet, wobei einer des ersten Hakenabschnitts (42a) und des ersten Schließerabschnitts (44a) mit dem ersten Seitenpaneel (18a) verbunden ist, und der andere des ersten Hakenabschnitts (42a) und des ersten Schließerabschnitts (44a) mit der ersten Seite (24a) des Eimers verbunden ist, wobei die zweite Schnappanordnung (40b) einen zweiten Hakenabschnitt (42b) und einen zweiten Schließerabschnitt (44b) beinhaltet, wobei einer des zweiten Hakenabschnitts und des zweiten Schließerabschnitts mit dem zweiten Seitenpaneel (18b) verbunden ist, und der andere des zweiten Hakenabschnitts und des zweiten Schließerabschnitts mit der zweiten Seite (24b) des Eimers verbunden ist.

## Revendications

1. Compartiment à bagages pour avion (140), comprenant :
un logement supérieur (26) incluant des premier et deuxième panneaux latéraux (18a, 18b) sur lesquels sont agencés :
un premier ensemble de manille (142a) incluant au moins l'une parmi une première plaque interne (175a) et une première plaque externe (177a) ; et
un deuxième ensemble de manille (142b) incluant au moins l'une parmi une deuxième plaque interne (175b) et une deuxième plaque externe (177b) ;
un bac (14) incluant un fond (28) et des premier et deuxième côtés (24a, 24b), dans lequel le bac coopère avec le logement supérieur pour définir un intérieur du compartiment ;
un premier mécanisme de pivotement (16a), associé en service au bac et au premier ensemble de manille ; et
un deuxième mécanisme de pivotement (16b) associé en service au bac et au deuxième ensemble de manille, dans lequel les premier et deuxième mécanismes de pivotement définissent un axe de pivotement (A1), et dans lequel le bac pivote autour de l'axe de pivotement par rapport au logement supérieur entre une position ouverte et une position fermée.

2. Compartiment à bagages pour avion (140) selon la revendication 1, dans lequel :
le premier côté (24a) du bac (14) est une première paroi latérale ;
le deuxième côté (24b) du bac (14) est une deuxième paroi latérale ;
le premier ensemble de manille (142a) s'étend entre le premier panneau latéral (18a) du logement supérieur (26) et la première paroi latérale du bac ;
le deuxième ensemble de manille (142b) s'étend entre le deuxième panneau latéral (18b) du logement supérieur et la deuxième paroi latérale du bac.

3. Compartiment à bagages pour avion (140), selon la revendication 1, dans lequel :
le compartiment à bagages pour avion est un assemblage de compartiment pivotant configuré pour recevoir des bagages et pour être positionné à l'intérieur d'un avion ;
le logement supérieur (26) inclut un renfort (12) ;
le premier ensemble de manille (142a) est fixé sur le premier panneau latéral (18a) et s'étend vers le bas de celui-ci ;
le deuxième ensemble de manille (142b) est fixé sur le deuxième panneau latéral (18b) et s'étend vers le bas de celui-ci ;
le premier mécanisme de pivotement (16a) est un premier essieu pivotant ; et
le deuxième mécanisme de pivotement (16b) est un deuxième essieu pivotant ; et
les premier et deuxième mécanismes de pivotement (16a, 16b) sont alignés axialement le long de l'axe de pivotement (A1).

4. Compartiment à bagages pour avion (140) selon l'une quelconque des revendications précédentes, comprenant en outre une première unité de connexion (150a, 150c) comportant une première extrémité connectée de manière pivotante au premier côté (24a) du bac (14) et une deuxième extrémité connectée de manière pivotante au premier panneau latéral (18a), et une deuxième unité de connexion (150b, 150c) comportant une première extrémité connectée de manière pivotante au deuxième côté (24b) du bac (14) et une deuxième extrémité connectée de manière pivotante au deuxième panneau latéral (18b), dans lequel les première et deuxième unités de connexion assurent l'une ou les deux fonctions consistant en un amortissement lorsque le bac pivote vers la position ouverte et en un assistance lorsque le bac pivote vers la position fermée.

5. Compartiment à bagages pour avion (140) selon la revendication 4, dans lequel le premier ensemble de manille (142a) inclut la première plaque interne (175a) et la première plaque externe (177a), dans lequel le premier mécanisme de pivotement (16a) s'étend entre la première plaque interne et la première plaque externe, le deuxième ensemble de manille (142b) incluant la deuxième plaque interne (175b) et la deuxième plaque externe (177b), dans lequel le deuxième mécanisme de pivotement (16b) s'étend entre la deuxième plaque interne et la deuxième plaque externe, et dans lequel la première unité de connexion (150a, 150c) est positionnée entre la première plaque interne et la première plaque externe, la deuxième unité de connexion (150b, 150c) étant positionnée entre la deuxième plaque interne et la deuxième plaque externe.

6. Compartiment à bagages pour avion (140) selon l'une quelconque des revendications précédentes, dans lequel au moins l'un parmi le premier et le deuxième mécanisme de pivotement (16a, 16b) inclut un ressort d'assistance (172) qui y est associé, le ressort d'assistance (172) étant préchargé lorsque le bac est pivoté vers la position ouverte ; et optionnellement dans lequel le ressort d'assistance (172) est un ressort hélicoïdal coaxial au premier ou au deuxième mécanisme de pivotement.

7. Compartiment à bagages pour avion (140) selon la revendication 5, dans lequel au moins une des première et deuxième unités de connexion (150a, 150b, 150c) inclut un ressort d'assistance qui y est associé, et dans lequel le ressort d'assistance est préchargé lorsque le bac est pivoté vers la position ouverte.

8. Compartiment à bagages pour avion (140) selon l'une quelconque des revendications précédentes, dans lequel le logement supérieur (26) inclut un élément d'arrêt (15), et dans lequel le fond (28) du bac (14) inclut un bord supérieur arrière (14b) butant contre l'élément d'arrêt lorsque le bac se trouve dans la position ouverte.

9. Compartiment à bagages pour avion (140) selon les revendications 3 ou 1, dans lequel le premier mécanisme de pivotement (16a) s'étend à travers le premier côté (24a) du bac (14) et entre les premières plaques interne et externe (175a, 177a), le deuxième mécanisme de pivotement (16b) s'étendant à travers le deuxième côté (24b) du bac et entre les deuxièmes plaques interne et externe (175b, 177b).

10. Assemblage de compartiment pivotant (140) selon la revendication 9, comprenant en outre des premier et deuxième assemblages de verrouillage (40a, 40b), le premier assemblage de verrouillage (40a) étant associé au premier panneau latéral (18a) et au premier côté (24a) du bac (14), le deuxième assemblage de verrouillage (40b) étant associé au deuxième panneau latéral (18b) et au deuxième côté (24b) du bac.

11. Assemblage de compartiment pivotant (140) selon la revendication 10, dans lequel le premier assemblage de verrouillage (40a) inclut une première partie de crochet et une première partie de butoir, dans lequel l'une parmi la première partie de crochet (42a) et la première partie de butoir (44a) est associée au premier panneau latéral (18a), l'autre parmi la première partie de crochet (42a) et la première partie de butoir (44a) étant associée au premier côté (24a) du bac, dans lequel le deuxième assemblage de verrouillage (40b) inclut une deuxième partie de crochet (42b) et une deuxième partie de butoir (44b), dans lequel l'une parmi la deuxième partie de crochet et la deuxième partie de butoir est associée au deuxième panneau latéral (18b), l'autre parmi la deuxième partie de crochet et la deuxième partie de butoir étant associée au deuxième côté (24b) du bac.
